# EUROPÄISCHE PATENTSCHRIFT

(11) **EP 1 257 809 B1**
(45) Veröffentlichungstag und Bekanntmachung des Hinweises auf die Patenterteilung: **31.10.2007**
(21) Anmeldenummer: 01919300.2
(22) Anmeldetag: 16.02.2001
(51) Int. Cl.: G01N 21/55

(54) **SPR-SENSOR UND SPR-SENSORANORDNUNG**
SPR SENSOR AND SPR SENSOR ARRANGEMENT
DETECTEUR SPR ET DISPOSITIF DE DETECTION SPR

(30) Priorität: 22.02.2000 DE 10008006
(43) Veröffentlichungstag der Anmeldung: 20.11.2002
(73) Patentinhaber: Graffinity Pharmaceutical Design GmbH, 69120 Heidelberg (DE)
(72) Erfinder: DICKOPF, Stefan, 69118 Heidelberg (DE); SCHMIDT, Kristina, 69198 Schriesheim (DE); VETTER, Dirk, 69120 Heidelberg (DE)
(74) Vertreter: HOFFMANN EITLE
(86) Internationale Anmeldenummer: PCT/EP2001/001793
(87) Internationale Veröffentlichungsnummer: WO 2001/063257

(56) Entgegenhaltungen:
- EP-A- 0 971 226
- WO-A-95/22754
- WO-A-97/15819
- WO-A-99/30135
- WO-A-99/60382
- US-A- 5 313 264
- US-A- 5 792 667
- US-A- 5 858 799
- US-A- 5 917 607

## Beschreibung

### Gebiet der Erfindung

Die vorliegende Erfindung betrifft die Bereitstellung von SPR-Sensoren, die zur gleichzeitigen Erfassung einer Vielzahl von Proben befähigt sind, Verfahren zu deren Herstellung, Messanordnungen zum parallelen Auslesen der erfindungsgemäßen Sensoren sowie deren Verwendung bei der Wirkstoffsuche und dem Hochdurchsatzscreening.

### Hintergrund der Erfindung

Durch die weiter vorangetriebene Automatisierung im Bereich der Wirkstoffsuche ist die Fragestellung der Miniaturisierung und Parallelisierung von immer größerem Interesse. Die Miniaturisierung von Probengefäßen und Syntheseapparaturen und die Parallelisierung der ablaufenden Prozesse bedingt eine Vielzahl an zu untersuchenden Substanzen mit immer weniger Volumen. Daher ist es bei der Realisierung neuartiger Detektions- und Sensorsysteme notwendig, diese so auszubilden, dass gleichzeitig mehrere Messungen parallel ablaufen bzw. eine große Anzahl von Proben innerhalb kürzester Zeit hintereinander gemessen werden können und die dafür benötigten Substanzmengen minimiert werden (Hochdurchsatzscreening). Eine wichtige Rolle kommt dabei der Erhöhung des Automatisierungsgrades zu.

Weiterhin besteht die Notwendigkeit auch die für die Messung verwendeten Sensoren in einem parallelen und miniaturisierten Format vorzusehen, so dass die Messungen einer Vielzahl von Proben in kürzester Zeit und mit minimalem Probenvolumen und -verbrauch, realisiert werden können, um damit den Durchsatz an zu charakterisierenden Substanzen zu erhöhen.

Es ist eine sehr empfindliche Meßmethode zur Charakterisierung von Grenzflächen bekannt, die als Oberflächenplasmonen-Resonanz-Spektroskopie, üblicherweise als SPR, (Surface Plasmon Resonance) in der Literatur bezeichnet wird. Die Methode beruht auf der optischen Anregung von Oberflächen-Plasmonen entlang der Grenzfläche von Metallschichten.

Dabei wird üblicherweise das an einer dünnen Goldschicht reflektierte Licht detektiert. Bei geeigneter Resonanzbedingung (Einfallswinkel und Wellenlänge des Lichtes und Schichtdicke der Goldschicht) nimmt die Intensität des reflektierten Lichtes ab. Bei der Absorption des Lichtes werden Ladungsdichtewellen des Elektronengases an der Goldoberfläche angeregt. Diese Ladungsdichtewellen nennt man Plasmaschwingungen, ihre quantisierten Anregungszustände Plasmonen.

Um die Resonanz zu beobachten, gibt es zwei methodische Ansätze. Entweder benutzt man monochromatisches Licht und zeichnet die Intensität des reflektierten Lichtes in Abhängigkeit des Einfallswinkels auf, oder man hält den Einfallswinkel konstant und variiert die Wellenlänge des Lichtes. In beiden Fällen wird die Lage der Resonanz verschoben, wenn sich der Brechungsindex des Mediums ändert, welches sich auf der dem Lichteinfall abgewandten Seite der Goldschicht befindet.

Diese Methoden sind unter anderem nach dem Stand der Technik ausführlich von Striebel, Ch.; Brecht, A.; Gauglitz, G. in Biosensors & Bioelectronics 9 (1994), 139-146 beschrieben. Die Resonanzbedingungen für die Anregung der Oberflächen-Plasmonen hängen stark von den optischen Eigenschaften des die Metallschicht umgebenden Dielektrikums ab. Die Bestimmung von Brechzahl oder Schichtdicke dünner dielektrischer Schichten ist grundsätzlich nach dem bekannten Stand der Technik mit einer hohen Genauigkeit möglich.

Die SPR-Spektroskopie findet zunehmend z.B. in der biochemischen Analytik Anwendung, da mit ihr die direkte und markierungsfreie Untersuchung der Wechselwirkung zwischen Interaktionspartnern möglich ist (zum Beispiel bei Biomolekülen Antikörper/Antigen-Reaktionen). Dazu wird ein Interaktionsspartner (z.B. Ligand) auf der Metalloberfläche immobilisiert, der andere Interaktionspartner (z.B. Analyt) wird in Lösung über die Oberfläche geleitet. Die Wechselwirkung ist als Schichtdickenzuwachs über die Brechzahländerung direkt nachweisbar.

Eine mit der Miniaturisierung und parallelen Messung vieler Proben einhergehende zu lösende Aufgabe ist das Inkontaktbringen der Sensorfelder mit Flüssigkeit, ohne dass beispielsweise Kreuzkontamination auftritt.

Herkömmliche SPR-Sensoren verwenden bei der Wirkstoffsuche ein Prisma, das eine dünne Metallschicht trägt. Die zu messende Probe wird mit dem Metall bzw. der modifizierten Metalloberfläche in Kontakt gebracht, und das SPR-Reflexionsspektrum der Probe wird durch Einkoppeln von Licht in das Prisma und Messen der Intensität des reflektierten Lichts als Funktion des Einfallswinkels gemessen. (Vgl. Kapitel 8, "Small Molecule Drug Screening based on Surface Plasmon Resonance" in Advances in Drug Discovery Techniques, John Wiley & Sons Ltd., London 1998)

Einen parallelen Ansatz zur Analyse eines Probenarrays stellt die SPR-Mikroskopie (SPM) dar (siehe z.B. EP 388 874 A2 oder M. Zizlsperger, W. Knoll, Progr. Colloid Polym. Sci. 1998, 109, S. 244-253). Hier wird die auf einem Prisma angebrachte Goldoberfläche an verschiedenen Bereichen mit verschiedenen Proben belegt und eine Abbildung der Goldoberfläche unter dem SPR-Winkel auf einen CCD-Chip erzeugt.
Während des Messvorgangs wird der Winkel mit einer mechanischen Abtastvorrichtung bzw. Scanvorrichtung geändert. Diese Methode ist jedoch auf kleine Objektdurchmesser beschränkt.

Eine neuere SPR-Methode wird in WO 94/16312 A1 offenbart. Hier wird die Detektion der Bindung geringer Stoffmengen mittels Lichtleitfasern realisiert, die teilweise mit einer Goldschicht belegt sind. Aber auch hier besteht das Problem in der Konstruktion eines Sensorarrays, das nach diesem Prinzip viele Proben parallel untersuchen soll. Denn ein solcher Array von goldbeschichteten Fasern ist einerseits teuer und sehr empfindlich gegen mechanische Verspannungen, andererseits ist die parallele Herstellung des Arrays nach dortigem Vorschlag technisch nur schwer realisierbar.

Lichtleitfasern werden auch in WO 98/32002 A1 verwendet. Zum Schutz gegen mechanische Beschädigung befindet sich das Faserkabel in einer Pipette. Zur Realisierung eines Arrays wird das Aneinanderreihen solcher Pipetten vorgeschlagen. Eine Miniaturisierung ist jedoch schwer zu realisieren, insbesondere bei der parallelen Messung vieler verschiedener Proben.

WO 97/15819 A1 beschreibt einen Zweikanalsensor bestehend aus einem Objektträger, wie er in der Mikroskopie verwendet wird. Die Flüssigkeitszufuhr zum Gold-Sensorfeld wird mit Hilfe einer Flusszelle realisiert. Ein solcher Aufbau ist insbesondere bei miniaturisiertem HTS aufwendig.

Aus US-5,485,277 ist eine SPR-Sensoranordnung bekannt, welche einen Wellenleiter verwendet, der so gestaltet ist, dass darin eine Mehrfachreflexion stattfindet, womit die Signalauswertung vereinfacht wird. Zur Messung können mehrere räumliche Kanäle vorgesehen werden, z.B. ein Sensorkanal und ein Referenzkanal. Es wird aber nicht erwähnt, wie die getrennten Kanäle erzeugt werden.

Aus DE-196 15 366 A1 ist ein Verfahren und eine Einrichtung bekannt, um eine Vielzahl von z.B. matrixartig angeordneten Proben gleichzeitig zu messen. Die Trennung der Proben erfolgt durch räumlich getrenntes Aufbringen der Proben.

WO-99/41594 beschreibt ein SPR-System, bei dem zur besseren Zeitauflösung die Materialeigenschaften von Bereichen, die an eine durchgehende SPR-fähigen Schicht angrenzen, modifiziert werden, um eine räumlich oder zeitlich aufgelöste Bestimmung der Intensität der von der Oberfläche reflektierten Strahlung zu ermöglichen.

WO-90/05295 beschreibt ein SPR-System, welches eine Vielzahl von Sensoroberflächen aufweist. Das SPR-Sensorsystem besteht aus einer Glasplatte, die mit einer Metallschicht überzogen ist, worauf wiederum ein dielektrischer Film aufgebracht ist. Die Liganden, welche ein Messung ermöglichen, werden auf den dielektrischen Film aufgebracht. Die getrennten Sensorbereiche werden durch die getrennte Aufbringung der Liganden erzeugt.

Eine weitere Möglichkeit zur gleichzeitigen Erfassung einer Vielzahl von Proben ist in WO 99/60382 A1 beschrieben, aus welcher der Oberbegriff des Patentanspruchs 1 bekannt ist. Bei der beschriebenen Anordnung sind auf einem planaren Träger mehrere streifenförmige Lichtwellenleiter in einem definierten Abstand angeordnet und mit einer die Anregung von Oberflächen-Plasmonen ermöglichenden dünnen Metallschicht versehen, wobei Mittel vorgesehen sind, die die Erfassungsbereiche der einzelnen dünnen Metallschichten durch Unterbrechung der Metallschicht voneinander derart trennen, dass jeder der Lichtwellenleiter nur eine Probe zuordenbar ist.

Der in WO 99/60382 A1 beschriebenen Lichtwellenleiter ist auf einer Trägerplatte fixiert. Dies erfordert eine sehr hohe Präzision bei der Herstellung. Die lichtführende Schicht wird in einem eigenen Beschichtungsschritt aufgebracht, wobei Inhomogenitäten von Sensor zu Sensor auftreten können. Bei Eindringen von Lösemittel in die entstandene Grenzschicht zwischen Träger und lichtführender Schicht können sich Probleme mit der Haftung der aufgebrachten Schicht ergeben.

Aus US-5,917,607 ist ein SPR-Sensor bekannt, bei welchem auf einem Prisma mit halbkreisförmigem Querschnitt auf der flachen Seite mehrere separate Metallfilmschichten vorgesehen sind. Mittels einer Strahlablenkung können die verschiedenen Stellen mit einem Lichtstrahl sequentiell abgefahren werden.

Aus WO 95/22754 ist eine SPR-Messanordnung bekannt, bei welcher mehrere Untersuchungsgefäße zu einer Einheit zusammengeschlossen sind, jedes Untersuchungsgefäß am Boden eine SPR-fähige Schicht hat, und der darunter liegende Teil des Gefäßes prismenförmig ausgebildet ist, um Licht einzukoppeln.

Aus WO 99/30135 ist ein SPR-Sensor bekannt, der ein quadratisches Raster von Sensorflächen hat, welche durch Deiche definiert sind, die auf der Oberfläche angebracht sind, um die Sensorflächen zu umschließen und abzugrenzen. Die Deiche können photoabsorbierend sein.

Aus WO 97/15819 ist ein SPR-Sensor mit planarem Lichtleiter bekannt, wobei in einer Ausführung zwei Messbereiche auf der Oberfläche gezeigt sind, um zwei Messkanäle zu definieren. Die Ausmessung der Strahlung aus den Messkanälen erfolgt durch zwei getrennte Messsonden.

### Aufgabe der Erfindung

Der vorliegenden Erfindung liegt die Aufgabe zugrunde, SPR-Sensoren, welche vorzugsweise planar sind, und Messanordnungen bereitzustellen, die einen einfacheren Aufbau haben, sowie Verfahren zu deren Herstellung, die kostengünstiger als die nach bekanntem Stand der Technik sein sollen, die befähigt sind, eine Vielzahl von Proben gleichzeitig zu erfassen. Insbesondere sollen SPR-Sensoren geschaffen werden, welche eine lichtführende Schicht enthalten, die mindestens zwei Sensorflächen enthält, sowie eine Arrayanordnung aus mindestens zwei SPR-Sensoren bereitgestellt werden, wobei die Nachteile der WO 99/60382 A1 vermieden werden solllen.

### Zusammenfassung der Erfindung

Gelöst wird diese Aufgabe durch die kennzeichnenden Merkmale des Anspruchs 1 und durch die Gegenstände der nebengeordneten Ansprüche. Bevorzugte Ausführungen werden in den Unteransprüchen beschrieben.

Erfindungsgemäß wird für einen SPR-Sensor, der zur parallelen Messung einer Vielzahl von Proben geeignet ist, eine selbsttragende Struktur geschaffen, bei welcher ein SPR-Sensorbereiche tragender Körper selbst strahlungsleitend ist und selbst an der Strahlführung für die SPR-Messung teilnimmt. Der Sensor ist planar, und die Strahlung wird durch die Trennmittel zwischen den Sensorbereichen vereinzelt.

Unter Strahlung soll hierbei jede zur Anregung von Plasmonen geeignete Strahlung gemeint sein, insbesondere elektromagnetische Strahlung, welche aus dem IR-Bereich oder dem sichtbaren Bereich stammt. Diese bevorzugte Strahlung wird manchmal auch einfach als Licht bezeichnet, wobei hiermit jedoch keine Beschränkung auf sichtbares Licht gemeint ist.

Durch den erfindungsgemäßen Aufbau eines SPR-Sensors werden die Nachteile des Standes der Technik (insbesondere der WO 99/60382 A1) hinsichtlich der Herstellungsprobleme überwunden, da eine Vielzahl von strahlungsführenden SPR-Sensorbereichen in einem Sensor vorgesehen werden kann, ohne dass ein gesonderter Träger vorgesehen werden muss. Dadurch ist der erfindungsgemäße SPR-Sensor nicht nur einfacher in der Herstellung, sondern auch kompakter als bekannte gattungsgemäße SPR-Sensoren. Dies erleichtert unter anderem die Integration von mehreren SPR-Sensoren zu einer SPR-Sensoranordnung.

Gegenüber dem Stand der Technik nach DE-196 15 366 A1, US-5,485,277, WO-99/41594 oder WO-90/05295 weist die vorliegende Erfindung den Unterschied und Vorteil auf, dass die Trennung der SPR-Sensorbereiche durch eine Unterbrechung der SPR-fähigen Schicht erfolgt, so dass eine klare und eindeutige Trennung der einzelnen Probenbereiche von vornherein gegeben ist, und keine komplizierten Belegungstechniken für die Liganden oder Messmaterialien verwendet werden müssen.

Unter Verwendung der erfindungsgemäßen Sensoren bzw. Sensoranordnungen sind winkelabhängige Messungen möglich, die aufgrund der geringen Abmessungen mit einem.Lichtwellenleiter prinzipiell nicht durchgeführt werden können.

Obwohl die erfindungsgemäßen SPR-Sensoren aus zunächst getrennt vorliegenden SPR-Sensorbereichen und einem Körper zusammengefügt werden können, werden die SPR-Sensoren vorzugsweise ausgehend von einem einzigen strahlungsleitenden Substrat hergestellt, in welchem SPR-Sensorbereiche gebildet werden, welche auf einer Oberfläche eine SPR-geeignete bzw. SPR-fähige Beschichtung passender Dicke aufweisen (z.B. Platin, Gold, Silber, Aluminium, Kupfer, Nickel, oder geeignete Legierungen), wobei unter Umständen eine haftvermittelnde Zwischenschicht (z.B. Chrom) eingefügt ist. Diese im Substrat gebildeten SPR-Sensorbereiche, in welche Strahlung eingekoppelt werden kann und durch welche diese Strahlung geführt werden kann, um Oberflächen-Plasmonen in der SPR-Schicht anzuregen, und um die durch den SPR-Effekt (d.h. eine wellenlängenabhängige oder winkelabhängige Intensitätsverminderung, welche über die dielektrischen Eigenschaften der Außenseite der SPR-Schicht Auskunft gibt) modifizierte Strahlung weiter zu einer Auswerteeinrichtung zu führen, sind durch Trennmittel getrennt, so dass die Strahlung, welche aus getrennten SPR-Sensorbereichen stammt, getrennt erfasst werden kann. Die Trennmittel sorgen auch dafür, dass jeder SPR-Sensorbereich einer auszumessenden Probe zugeordnet werden, d.h. dass keine Kontamination zwischen benachbarten SPR-Sensorbereichen stattfindet.

Gemäß eines ersten prinzipiellen Aufbaus werden die Trennmittel durch die Aufbringung von Erhebungen auf der Oberfläche des Substrats gebildet, welche sich zwischen den SPR-Schichten befinden, wobei der Stoff aus denen diese Erhebungen bestehen, so gewählt ist, dass keine Strahlungsausbreitung in den Bereichen des Substrats zwischen den SPR-Sensorbereichen stattfindet, z.B. indem diese Strahlung durch diesen Stoff absorbiert wird. Hierzu muss der Brechungsindex des Stoffs geeignet gewählt werden, um eine Totalreflexion in den Zwischenbereichen zu verhindern, und der Stoff muss strahlungsabsorbierend bzw. dämpfend wirken. Wenn das Substrat aus Glas besteht, ist z.B. Silizium oder eine Siliziumverbindung hierzu geeignet. Im übrigen sind die Erhebungen so gewählt, dass sie eine Fluidbarriere darstellen, so dass keine Kontamination zwischen benachbarten Proben bzw. Sensorbereichen stattfindet.

Wie man erkennt, bildet bei dem ersten prinzipiellen Aufbau das Substrat selbst den tragenden Körper für die SPR-Sensorbereiche, da diese SPR-Sensorbereiche und die Trennbereiche integrale Bestandteile des Substrats sind, und das Substrat in seinem Volumen unverändert bleibt. Lediglich die Oberfläche wird verändert, um die entsprechenden Sensorbereiche bzw. Trennbereiche im Inneren des Substrats zu definieren. Somit findet jede Strahlungsleitung bzw. Strahlungsführung in den Sensorbereichen auch im tragenden Körper bzw. Substrat statt.

Gemäß eines zweiten prinzipiellen Aufbaus werden die Trennmittel durch Ausnehmungen im Material des Substrats zwischen den SPR-Sensorbereichen gebildet. Diese Ausnehmungen können durch jedes geeignete Verfahren gebildet werden, z.B. durch Sägen, Fräsen, Ätzen, usw. Hierdurch bilden die SPR-Sensorbereiche Finger, welche vom verbleibenden ursprünglichen Substrat abstehen, wobei dieses verbleibende ursprüngliche Substrat den tragenden Körper für die Sensorbereiche bildet. Allerdings sind die Finger strahlungsleitend mit dem Restsubstrat bzw. Körper verbunden, und die in die Sensorbereiche eingekoppelte Strahlung läuft auch durch den Körper. Der zweite prinzipielle Aufbau hat den besonderen Vorteil, dass die abstehenden Finger, welche SPR-Sensorbereiche darstellen, in einem geeigneten Raster angeordnet werden können, und solche geeignet gerasterten SPR-Sensoren zu Sensoranordnungen bzw. Sensorarrays zusammengesetzt werden können, welche mit Mikrotiterplatten entsprechenden Formats zusammenwirken können. Hierdurch werden besonders effiziente SPR-Sensorarrays für das Hochdurchsatzscreening geschaffen.

### Kurze Beschreibung der Zeichnungen

Weitere Merkmale, Eigenschaften und Vorteile der vorliegenden Erfindung gehen aus der nachfolgenden ausführlichen Beschreibung bevorzugter Ausführungen hervor, welche auf die Zeichnungen Bezug nehmen, in welchen:
- Figur 1a: eine Ausführung des ersten prinzipiellen Aufbaus eines Sensors zeigt, bei der die Länge der Oberflächenbeschichtung des SPR-Materials und des Trennmaterials entlang der gesamten Höhe des Sensors verläuft, .
- Figur 1b: eine weitere Ausführung des ersten prinzipiellen Aufbaus zeigt, bei der die Länge der Beschichtung des SPR-Materials und des Trennmaterials nicht entlang der gesamten Höhe des Sensors verläuft,
- Figur 2a und 2b: den Strahlengang der Strahlung, bei dem die Lichteintritts- und austrittsflächen auf entgegengesetzten Seiten des SPR-Sensorbereichs liegen,
- Figur 2c: den Strahlengang der Strahlung zeigt, bei dem die Eintrittsfläche mit der Austrittsfläche identisch ist,
- Figur 2d: eine schematische Perspektivansicht zeigt, welche die Wirkung der Sensorbereiche und der Trennbereiche veranschaulicht,
- Figur 3: eine Querschnittsansicht eines Sensors nach dem ersten prinzipiellen Aufbau zeigt,
- Figuren 4a und 4b: mögliche Arrayanordnungen von Sensoren nach dem ersten prinzipiellen Aufbau zeigen,
- Figur 5a und 5b: weitere mögliche Ausführungsformen eines Sensors und eines entsprechenden Sensorarrays zeigen,
- Figur 6a: einen Sensor nach dem zweiten prinzipiellen Aufbau zeigt,
- Figur 6b: eine mögliche Arrayanordnung mehrerer Sensoren nach Fig. 6a zeigt,
- Fig. 7a: schematisch eine mögliche Ausführung einer Messanordnung für die winkelabhängige Messung,
- Fig. 7b: einen vergrößerten Ausschnitt aus dem Strahlengang innerhalb der lichtführenden Schicht nach Fig. 7a zeigt, und
- Fig. 8: schematisch eine mögliche Ausführung einer Messanordnung für die wellenlängenabhängige Messung zeigt.

### Ausführliche Beschreibung von Ausführungen der Erfindung

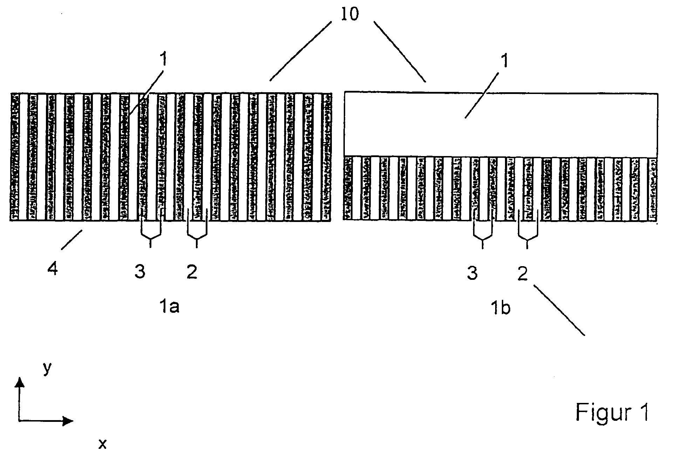

Die Figuren 1a und 1b zeigen Ausführungen des ersten prinzipiellen Aufbaus eines erfindungsgemäßen Sensors 10. Dieser besteht aus einer optisch lichtführenden Schicht 1 bzw. allgemein aus einem strahlungsleitenden Substrat 1, das aus einem einheitlichen Material gefertigt ist. Zur Vereinfachung der Beschreibung wird die Abmessung entlang der abgebildeten x-Achse als Breite bezeichnet, die Abmessung entlang der abgebildeten y-Achse als Höhe, und die Abmessung senkrecht zur x-y-Ebene (Blattebene) als Dicke.

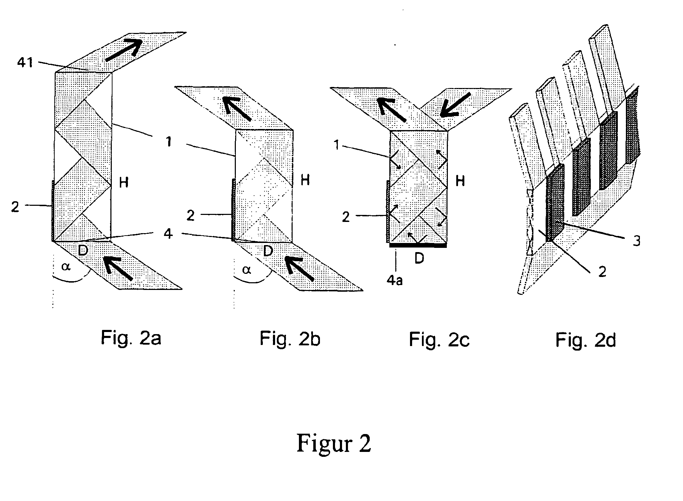

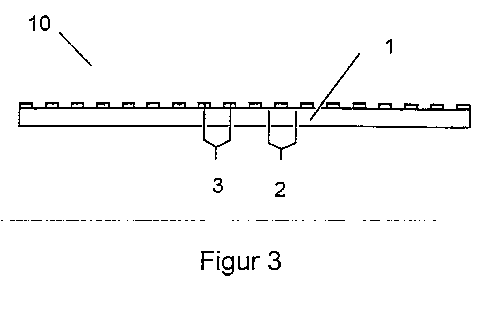

Das Substrat 1 trägt Sensorflächen 2, die durch Bereiche 3 getrennt sind, die eine regelmäßige Beabstandung gewährleisten. Vorzugsweise sind die Flächen 2 und 3 streifenförmig, parallel und gleich beabstandet, wie abgebildet. Die Sensorflächen 2 bestehen aus einer SPR-fähigen Schicht, vorzugsweise einer Metallschicht aus Platin, Silber, Aluminium, Kupfer, Nickel, besonders bevorzugt einer Goldschicht. Zusätzlich sollte zwischen lichtführender Schicht bzw. Substrat und Sensorschicht zur besseren Haftung eine haftvermittelnde Schicht aufgebracht werden (nicht dargestellt), z.B. aus Chrom oder Titan. Die Bereiche 3 trennen die Sensorflächen derart, dass eine Kontamination eines Nachbarfeldes bei Inkontaktbringen des entsprechenden Sensorfeldes mit Flüssigkeit vermieden werden kann. Dies wird z.B. dadurch bewirkt, dass die Trennbereiche 3 als Erhebungen ausgebildet sind, wie in der Perspektivansicht der Fig. 2d oder der Querschnittsansicht der Fig. 3 gezeigt. Weiterhin dient der Bereich 3 dazu, das Licht, welches nicht an der Sensorfläche reflektiert wird, zu absorbieren. Hierzu sollte das Material der Trennbereiche 3 einen gegenüber dem Brechungsindex des Substratmaterials geeigneten Brechungsindex haben, damit nämlich eine Totalreflexion an der Grenzfläche vermieden wird, und eine Absorption stattfinden kann. Hierbei ergibt sich ein Strahlengang, wie er schematisch in Fig. 2d dargestellt ist. In Fig. 2d wird zur Detektion der SPR geeignete Strahlung, z.B. im sichtbaren Wellenlängenbereich, von unten eingestrahlt, und an der zum Einstrahlenden entgegengesetzten Ende tritt entsprechend der SPR-Sensorbereiche vereinzelte Strahlung aus, so dass eine getrennte Analyse der aus verschiedenen Sensorbereichen austretenden Strahlung erfolgen kann.

In Fig. 1a nehmen die Sensorflächen 2 und die Bereiche 3 die gesamte Höhe des Sensors 10 ein. In Fig. 1b wird jeweils nur ein Teil der Gesamthöhe benutzt. Ebenso können die Bereiche 3 die gesamte Höhe und die Sensorflächen jedoch nur einen Teil der Höhe des lichtleitenden Materials belegen (nicht dargestellt). Auch ist nicht erforderlich, dass alle Streifen eines Materials die gleiche Höhe haben. Jedoch sollte die Höhe der Trennmittel mindestens der Höhe der Sensorbereiche entsprechen.

In den Abbildungen der Figur 2a-2c werden Möglichkeiten zur Lichtführung in den Sensorbereichen als Seitenansicht von Fig. 1b schematisch dargestellt. Das Licht wird am Eintrittsfenster bzw. der Eintrittsfläche 4 des Sensorstreifens 1, dessen Fläche senkrecht zur Sensorfläche 2 steht, eingestrahlt und innerhalb der lichtleitenden Schicht 1 mittels Totalreflexion geführt. Es tritt im Fall der Fig. 2a und 2b auf der entgegengesetzten Seite zum Eintrittsfenster 4 aus, d.h. durch die Austrittsfläche 41. Hierbei wird das Anregungslicht auch an der Sensorfläche 2 reflektiert. Bei einer geraden Anzahl von Reflexionen tritt das Licht parallel versetzt aus dem Sensorstreifen 1 aus und bei einer ungeraden Anzahl von Reflexionen spiegelbildlich hierzu zur Seite des Lichteinfalls. Der Einstrahlwinkel α sollte ferner so gewählt werden, dass der Austritt des Lichtstrahls nur zu einer Seite erfolgt und der SPR-Effekt optimal ausgeprägt ist. Ein weiterer Fall stellt Fig. 2c dar. Hier wird das Licht durch das gleiche Fenster 4 ein- und ausgekoppelt. Um dies zu ermöglichen ist die mit 4a bezeichnete Seite des Sensors verspiegelt, womit das Licht reflektiert wird und durch das Eintrittsfenster wieder austritt.

Als Material für das Substrat 1 können sowohl Gläser als auch Polymere (z. B. Polycarbonat, PMMA, ORMOCER^{®}), die eine ausreichend hohe optische Transparenz im Bereich des sichtbaren Lichts bis in den Bereich des nahen infraroten Lichts aufweisen, gewählt werden. Gläser wie Borosilikat- oder optische Gläser allgemein werden hierbei bevorzugt, weil die optische Qualität der Oberfläche und das Medium schlierenfreier und mit geringeren Streueigenschaften behaftet ist als bei herkömmlichen Kunststoffen. Zudem zeichnen sich Gläser durch hohe Chemoresistenz und die für Biosensoren wichtige möglichst geringe unspezifische Proteinadsorption aus.

Der Brechungsindex des Materials sollte vorteilhafter Weise bei Verwendung von Gold als SPR-fähiger Schicht im Bereich 1,46 bis 1,58 liegen, um die Messung des SPR-Signals in einer Lösung mit dem Brechungsindex zwischen 1,33 bis 1,37 zu ermöglichen.

Der Sensor bzw. das Substrat 1 kann sowohl Dicken D annehmen, die eine Ausbreitung des Lichts im Sinne der Modenausbreitung als auch der geometrischen Optik als Strahlen erlaubt. Bevorzugt sind Dicken D zwischen 0,1 mm bis 5 mm. Minimal kann der Sensorstreifen 1 eine Höhe H aufweisen, die nur eine Reflexion an der Sensorfläche 2 erlaubt bzw. die Dimension der Sensorfläche 2 besitzt. Eine maximale Höhenbegrenzung ist je nach gewünschter mechanischer Stabilität der Streifen festzulegen. H und D sind so anzupassen, dass bei gewünschter Anzahl von Reflexionen ein SPR-fähiger Winkel erzielt wird. Eine zusätzliche Trägerschicht ist nicht erforderlich, kann jedoch ergänzend aufgebracht werden.

Um ein Übersprechen bei der Flüssigkeitsbeschickung zwischen einzelnen Sensorflächen zu vermeiden, kann der Trennbereich durch eine Erhebungen 3 bildende Deckschicht - wie in Figur 3 dargestellt - in Form einer Flüssigkeitsbarriere ausgestaltet sein. Die Deckschicht soll weiterhin absorbierend wirken, um die Unterteilung der flächigen Anregung in den einzelnen Sensorflächen durch Auslöschung des Lichtes in den Gebieten zwischen zwei Sensorfeldern zu gewährleisten. Das Material der Deckschicht muss somit eine hohe optische Absorption gegenüber dem einfallenden Licht haben, sowie eine chemische Stabilität gegen die verwendeten Reagenzien und Lösemittel besitzen. Ferner soll die Strukturierbarkeit mit bekannten mikrotechnischen Verfahren zur Herstellung von Deckschichten mit Breiten vorzugsweise im Bereich von 0,01 bis 10 mm, insbesondere 0,1 bis 1mm möglich sein.

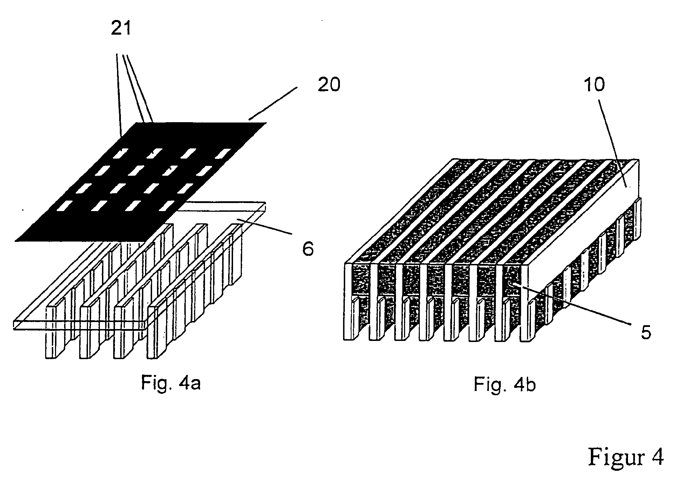

Die Figuren 4a und 4b zeigen zwei mögliche Anordnungen von einzelnen Sensoren zu Sensorarrays. Hierbei können eine große Anzahl, vorzugsweise 10 bis 100000 Sensorbereichen, parallel in einem definierten Abstand zueinander angeordnet werden.

Messanordnungen zum parallelen wellenlängenabhängigen Auslesen solcher Sensorarrays sind in DE 199 55 556.7 beschrieben, auf deren diesbezüglichen Offenbarungsgehalt hiermit bezug genommen wird und deren Inhalt hiermit durch Bezugnahme eingeschlossen wird.

Die gleichzeitige winkelabhängige Messung des SPR-Effekts aller Sensorfelder in einem solchen Array ist apparativ sehr aufwendig. Jedoch kann leicht eine winkelabhängige Messung des SPR-Effektes von einzelnen Sensoren mittels geeigneter Lichtführung parallel durchgeführt werden, wie später noch beschrieben wird.

Wie in Figur 4a dargestellt, werden zur Bildung einer SPR-Sensoranordnung bzw. SPR-Sensorarrays mehrere der planaren Sensoren 10 durch Verkleben der Sensoren an der Lichtaustrittsseite mit einer transparenten Deckplatte 6 zu einem Array angeordnet. Der dafür zu verwendende Klebstoff sollte optisch transparent im Bereich des sichtbaren Lichts bis in den Bereich des nahen infraroten Lichts sein bzw. allgemein durchlässig für die SPR-Strahlung sein, und einen Brechungsindex, ähnlich dem des Glases der Sensoren 10 und Deckplatte 6, aufweisen. 'Ähnlich' bedeutet hierbei einen Unterschied von höchstens 10%. Bei der Herstellung der Sensoren zu einem Array sollte darauf geachtet werden, dass die planaren, plattenförmigen Sensoren zueinander planparallel angeordnet werden.

Da sich bei diesem Aufbau keine lichtabsorbierenden Bereiche zwischen den Sensorstreifen befinden, ist es bei jenen Sensorarrays, die nach dem Schema der Fig. 2d beleuchtet werden, notwendig, das Anregungslicht, welches zwischen zwei Sensoren hindurchtritt, auszublenden. Dafür wird über dem Array eine Lochmaske 20 angeordnet, welche nur an den Stellen der Austrittsfenster Öffnungen 21 aufweist und damit Licht, welches nicht mit den Sensorfeldern in Kontakt kommt, ausblendet.

Figur 4b stellt die Anordnung von Sensoren zu einem Array unter Verwendung von Zwischenelementen bzw. Abstandhaltern 5 dar.

Die Sensoren werden durch Abstandhalter mit einer definierten Dicke in dem gewünschten Abstand zueinander angeordnet und gegeneinander gepresst oder nach dem Verpressen miteinander verklebt. Die Abstandhalter 5 haben auch die Aufgabe, Licht, welches nicht in die Sensoren eingekoppelt wird, auszublenden.

Die Seitenflächen der Abstandhalter sollten jedoch zueinander planparallel gefertigt werden, um zu garantieren, dass durch das Stapeln der Sensoren 10 und Abstandhalter 5 kein Keilfehler von Sensor zu Sensor entsteht. Daher sollte ein Material ohne mechanische Spannung verwendet werden, vorzugsweise das gleiche Material wie das Substrat der Sensoren.

Im Fall, dass Glas oder ein anderes strahlungsdurchlässige Material als Material für die Abstandhalter verwendet wird, müssen die Stirnseiten der Abstandhalter zusätzlich mit einer lichtabsorbierenden Schicht versehen werden, die garantiert, dass kein Licht durch diese Abstandhalter an den Detektor gelangen kann.

Die Verwendung eines Klebstoffs zum Fixieren des Arrays nach dem Stapeln setzt eine abgestimmte Materialauswahl von Sensor zu Klebstoff voraus. Der Brechungsindex des Klebstoffes muss kleiner als der des Materials der Sensoren sein, damit das Licht im Sensor mittels Totalreflexion geführt werden kann.

Das Einbringen des Klebstoffs in die Spalten zwischen Sensoren und Abstandhalter kann mittels Kapillarkräften erfolgen. Dadurch kann in einem ersten Schritt der Array gestapelt werden und in einem zweiten Schritt werden die Sensoren zueinander mit dem Klebstoff fixiert.

Werden die Sensoren nur verklemmt, so ermöglicht auch der verbleibende Luftspalt die Totalreflexion des eingestrahlten Lichts.

Die Anordnung mehrerer Sensoren zu einem Array erfordert eine genaue Ausrichtung der Sensoren zueinander, da dies für die optische Lichtein- und auskopplung des parallelen Lichtes unter einem definierten Winkel notwendig ist.

Der Abstand zwischen zwei Sensorbereichen oder Sensoren bestimmt das für die Anwendung notwendige Volumen und sollte möglichst minimal sein und vorzugsweise im Bereich 0,1 mm bis 10 mm liegen. Nach der Messung wird das Sensorarray aus der Messlösung herausgenommen. Handelt es sich bei dem Abstand von Sensor zu Sensor um einen Kapillarspalt, kann die Flüssigkeit mit porösem Material herausgesaugt, herausgeschleudert oder mit Druckluft in ein Auffanggefäß gespült werden. Bei größeren Spalten laufen diese von selber aus.

Verfahren zur Herstellung von Sensoren nach dem ersten prinzipiellen Aufbau sehen mehrere Schritte vor. In einem ersten Schritt können auf der lichtführenden Schicht vor oder nach der mechanischen Bearbeitung der lichteinkoppelnden Stirnflächen die lichtabsorbierenden Bereiche zwischen den Sensorflächen hergestellt werden. Dafür kann eine fotostrukturierbare Schicht verwendet werden, die auf das lichtleitende Substrat aufgetragen und mittels fotolithografischer Methoden strukturiert wird und somit in einem vorgegebenen Raster Bereiche freilegt. Eine in den oben angegebenen Lichtbereichen transparente Trägerplatte, die in ihrer Höhe der Länge der Streifen des lichtleitenden Substrates entspricht, wird mit einer homogenen Schicht Fotolack beschichtet. Diese (Deck-)Schicht ist fotostrukturierbar im UV und absorbierend im sichtbaren und/oder Infrarotbereich. Dieser Lack wird mittels einer Fotomaske belichtet, entwickelt und ausgehärtet. Danach wird diese Platte in mehrere Streifen bzw. Substrate 1 zerschnitten, deren Stirnseiten anschließend optisch poliert werden. Die Höhe der Streifen wird je nach Anzahl der Reflexionen, die für die SPR-Messungen herangezogen werden, bestimmt. Nach dem Polieren der Stirnseiten werden die Streifen mit einer SPR-fähigen Schicht, wie Gold, beschichtet.

Es können ebenso Substrate verwendet werden, die bereits die gewünschte Länge aufweisen und deren Stirnflächen poliert sind und die einzeln mit einem der oben genannten Verfahren die lichtabsorbierenden Stege erhalten. Die Beschichtung mit der SPR-fähigen Metallschicht erfolgt auch hier in einem letzten Arbeitsschritt.

Weiterhin können Siebdrucktechniken eingesetzt werden, die nur an den Öffnungen der Siebdruckmaske die lichtabsorbierende Schicht auf das lichtleitende Material auftragen. Ebenso kann eine vorstrukturierte Abdeckung mit Öffnungen, die den Sensorflächen entsprechen, mittels Kleben oder anderer Fügeverfahren auf das Material aufgebracht werden. Die mit diesen Methoden hergestellten freien Bereiche werden in einem nachfolgenden Schritt zunächst mit einer haftvermittelnden Schicht, vorzugsweise einer dünnen Metallschicht versehen. Mittels Sputtern oder Bedampfen wird dann eine dünne SPR-fähige Schicht, beispielsweise aus Gold aufgetragen. Zuvor wird eine haftvermittelnde Schicht aufgetragen, die dünn (z.B. eine Größenordnung dünner) gegenüber der SPR-fähigen Schicht sein sollte, so dass die SPR- Resonanz möglichst wenig beeinflusst wird. Die lichtabsorbierenden Bereiche können mit beschichtet werden, was die oben beschriebenen Funktionen nicht verändert, weil das Licht nicht bis an diese Schicht vordringt. In anderen Worten, die lichtabsorbierenden Bereiche werden vorzugsweise als Masken bei der Aufbringung der SPR-fähigen Schicht verwendet.

Die erzeugten Sensorgebiete werden vorteilhafter Weise in einem Raster, welches den derzeitig üblichen Mikrotiterplattenformaten entspricht, einem vielfachen oder ganzzahlig geteiltem Maß davon zueinander angeordnet. Dies erlaubt das Auftragen von Flüssigkeit, beispielsweise Proben beinhaltend, aus Mikrotiterplatten mittels Flüssigkeitstransfergeräten auf die Sensorflächen, die durch das Vorhandensein der flüssigkeitsbegrenzenden Barrieren nicht auf benachbarte Sensorflächen übersprechen können.

Figur 4a und 4b zeigen die Anordnung einzelner Sensorstreifen zu einem Sensorarray. Dabei werden durch das Aneinanderfügen von m Sensoren des lichtleitenden Substrates mit n-Sensorflächen m x n Sensorbereiche bereitgestellt. Die Sensoren werden durch Abstandhalter 5 in einem definierten Abstand zueinander angeordnet und gegeneinander gepresst, oder verklebt, oder mittels einer Deckplatte 6 fixiert, beispielsweise durch Verkleben.

Die dargestellten einzelnen Sensoren der Lichtleiter können mit Hilfe von Pipettierrobotern oder anderen Flüssigkeitstransfergeräten mit Flüssigkeit in Kontakt gebracht werden, bevor sie zu einem Array angeordnet werden. Hierzu ist es erforderlich die Sensoren zu legen. Dabei wird beispielsweise aus Mikrotiterplatten, die in jeder Kavität eine andere Lösung enthält, eine geringe Flüssigkeitsmenge auf die Sensorfläche gegeben. In einer bevorzugten Ausführungsform sind bis zu 96 Sensorflächen auf einem 120 mm breiten Sensor herstellbar. Eine weitere Miniaturisierung ist mit den genannten Mikrotechnikverfahren möglich.

Figur 5a zeigt eine weitere Ausführung, in der Einzelsensoren 100 hergestellt werden, die zusätzlich einen Abstandhalter 50 tragen. Die lichtabsorbierenden und flüssigkeitsbegrenzenden Trennbereiche werden in einem zweiten Material hergestellt und mit dem lichtleitenden Substrat fest verbunden. In diesem Beispiel wird ein Siliziumwafer so strukturiert, dass in einem ersten bereich 51 Abstandselemente entstehen, und in einem demgegenüber zurückversetzten Bereich 52 offene Bereiche 54 entstehen, die die Sensorregionen freilassen, und ebenfalls Erhebungen bzw. Stege 53 entstehen, die als Fluidbarrieren dienen. Der strukturierte Siliziumwafer, der mehrere Kopien der benötigten Lichtleiterstreifen trägt, wird auf das lichtleitende Substrat gebondet und im Anschluss daran wird dieser Verbund in Streifen bzw. Platten zerteilt und die Stirnflächen poliert. Als letzter Schritt erfolgt die Beschichtung mit der SPR-fähigen Schicht, welche durch die offenen Bereiche direkt auf dem lichtleitenden Substrat abgeschieden wird. Erneut dienen die Trennmittel als Maske.

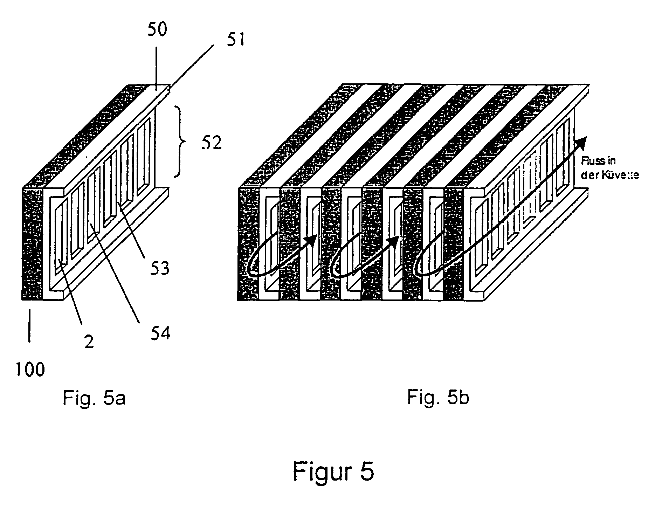

In Figur 5b ist ein Array aus solchen Sensoren 100 wiedergegeben. Man geht von Einzelsensoren 100 aus, die miteinander so verbunden werden, dass die zwischen den Sensoren 100 befindlichen Kapillarspalten miteinander mäanderförmig verbunden sind und durch eine externe Pumpe befüllt und wieder entleert werden können. In diesem Fall sollten die Sensorregionen auf dem Sensor 100 in einem ersten Schritt mit den zu messenden Proben beschichtet werden und dann mehrere Streifen mittels Verpressen oder Verkleben zu einer Art "Durchfluß-Küvette" verbunden werden.

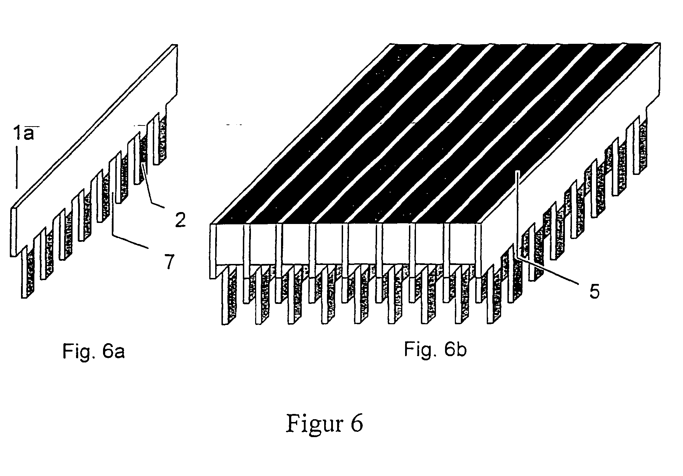

Figur 6a zeigt eine besonders bevorzugte Ausführung, welche ein Beispiel für den zweiten prinzipiellen Aufbau ist, in der die Trennbereiche 3 durch Ausnehmungen 7 erzeugt werden. Hierbei werden ebenfalls planare, transparente Substrate benutzt, um sowohl einen Sensor mit einer Vielzahl von Sensorfeldern, als auch durch die Anordnung mehrerer Sensoren hintereinander (Array) herzustellen.

In diesem Fall werden die Sensorflächen nicht durch ein lichtabsorbierendes Material, sondern räumlich direkt getrennt, indem das Material zwischen zwei Sensorgebieten 2 entfernt wird. Dies kann sowohl durch mechanisch abtragende Verfahren realisiert werden, wie zum Beispiel Sägen oder Fräsen, durch Laserabtragsprozesse oder verschiedenste Ätzverfahren, anzuwenden je nach Materialart und -dicke.

Als Ergebnis bleibt ein tragender Körper 1a, von welchem fingerförmig die Sensorbereiche 2 abstehen.

Eine besonders bevorzugte Ausführung eines Sensorarrays zeigt Fig. 6b, das ähnlich wie die Arrays der Figuren 4a und 4b hergestellt wird, unter Verwendung von Sensoren nach Figur 6a.

Hierbei sind in den Figuren 6a und 6b Anordnungen mehrerer kammartiger Sensoren wiedergegeben. Die spezielle Geometrie der Finger erlaubt vorteilhafter Weise eine sehr einfache Beschichtung der auf den Fingern befindlichen Goldsensorflächen. Der Abstand der Finger entspricht bevorzugt dem Raster einer 1536er Mikrotiterplatte und die Ausschnitte sind so dimensioniert, dass die Finger des Sensors oder Sensorarrays in die Kavitäten der Mikrotiterplatte eintauchen können. Damit kann die Beschichtung der Finger sowohl vor als auch nach dem Stapeln der Sensorstreifen zu einem m X n Array erfolgen, da in diesem Fall jede Sensorfläche räumlich von der benachbarten getrennt ist und somit jede Sensorregion für sich in eine Kavität getaucht werden kann. Vorteilhafterweise kann jede Sensorregion mit unterschiedlichen Liganden beschichtet werden. Die Messung erfolgt dann bevorzugt mit einem einzigen Analyten. Es besteht auch die Möglichkeit unterschiedliche Analyten beispielsweise in den Kavitäten einer Mikrotiterplatte vorzulegen und nur einen Liganden zu präsentieren.

Es ist auch möglich den ersten prinzipiellen Aufbau und den zweiten prinzipiellen Aufbau zu kombinieren, nämlich in einer weiteren Ausführung (nicht abgebildet) eines Sensors, der Trennbereiche enthält, die sowohl durch Ausnehmungen als auch durch Deckflächen definiert werden. Somit ist es beispielsweise möglich, dass ein Sensor Sensorbereiche hat, welche abwechselnd durch Ausnehmungen und durch Deckflächen getrennt sind. Es ist ebenfalls möglich eine grundsätzlich kammartige Struktur mit Ausnehmungen zu bilden, wie in Fig. 6a gezeigt, wobei allerdings die einzelnen Finger wiederum unterteilt sind, nämlich-durch Deckflächen.

Obwohl die in den Figuren gezeigten Sensoren alle parallele und gleich beabstandete Sensorbereiche haben, was bevorzugt ist, ist es genauso möglich, dass andere Strukturen verwirklicht werden. So kann insbesondere der Abstand und/oder die Breite der Sensorbereiche von einem Sensorbereich zum nächsten variieren, z.B. auf solche Weise, dass eine bestimmte Zahl von schmalen Sensorbereichen untereinander durch schmale Ausnehmungen getrennt sind, um eine Gruppe zu bilden, und von anderen gleichartigen Gruppen durch Ausnehmungen getrennt sind, die breiter sind als die schmalen Ausnehmungen innerhalb einer Gruppe.

Ein einzelner Sensor oder auch ein Sensorarray wird mit parallelem oder fokussiertem Licht beleuchtet. Unter der Voraussetzung, dass das Licht nicht senkrecht in die Sensoren eingestrahlt wird, tritt nur das Licht in den Sensor ein, welches durch die Stirnseiten der "Finger" bzw. Sensorbereiche in den Sensorstreifen eingestrahlt wird. In der lichtführenden Schicht wird das Licht an den Sensorflächen reflektiert. Unter den geeigneten Resonanzbedingungen kommt es zur Ausbildung einer Ladungsdichtewelle entlang der Grenzfläche zwischen Gold und Flüssigkeit und die Intensität des reflektierten Lichtes wird abgeschwächt. Die Wellenlängen- oder Winkelabhängigkeit der Intensität des reflektierten Lichts kann eine mit dem Sensor in Kontakt gebrachte Flüssigkeit charakterisieren.

Das in den Sensor eingekoppelte Licht verlässt nach mindestens einer Reflexion an der Sensorfläche den Sensor und wird dann zur Auswertung auf eine Detektoreinheit (Det, z.B. CCD-Kamera) abgebildet. Licht, welches nicht in die Stirnflächen der SPR-Sensorbereiche 2 eingekoppelt wurde oder durch Streuung an Kanten entsteht, wird weitgehend von den Abstandhaltern 5, 50 bzw. der Abdeckung 6 "geblockt" oder es wird in Richtungen reflektiert, die nicht vom Detektor nachgewiesen werden. An der Lichtaustrittsseite der Sensoren treten Lichtstrahlen an den Stellen aus, unter denen sich eine Sensorfläche befindet; in den Zwischenbereichen tritt kein Licht aus (Fig. 2d).

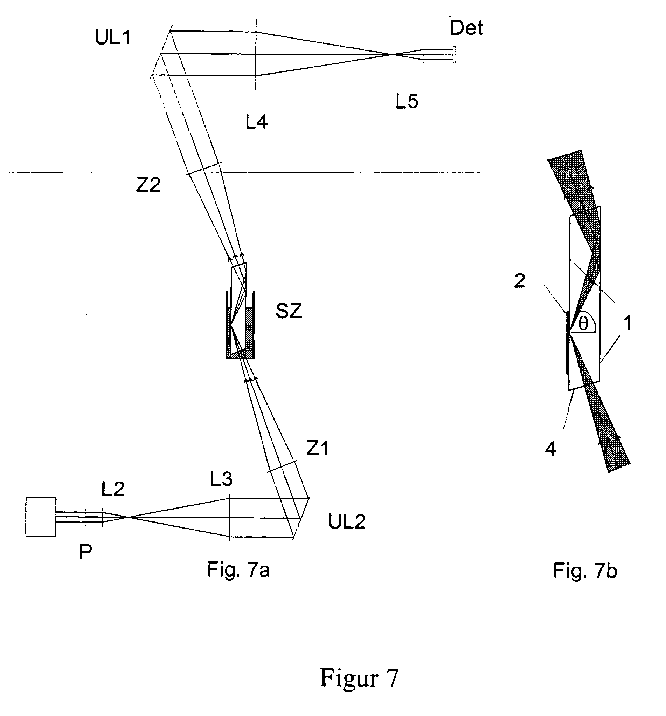

Neben der Durchleuchtung der Sensorstreifen mit parallelem Licht, wie es bereits in Figur 2a-2d angedeutet wurde, und einer Messung der Wellenlängenabhängigkeit der transmittierten oder reflektierten Intensität, können die Sensoren auch mit einem fokussierten Strahl beleuchtet werden, um die Winkelabhängigkeit der transmittierten Intensität zu messen. Dies wird unter Bezugnahme auf Fig. 7a und 7b beschrieben.

Dazu tritt nach Fig. 7b ein durch eine geeignete Fokussiereinrichtung fokussierter Lichtstrahl durch das Einstrittsfenster 4 in die lichtführende Schicht 1 ein, und wird intern an der aktiven Sensorschicht 2 reflektiert, an der auch der Fokus des Strahls liegt. Nach dieser Reflexion ist der Strahl wieder divergent und tritt aus der lichtführenden Schicht aus. Die Länge und die Anzahl der Reflexionen sollte in dieser Ausführung begrenzt werden, damit der Querschnitt des divergenten Lichtstrahls nicht breiter als das Austrittsfenster der lichtführenden Schicht wird. Die Ein- und Austrittsfenster sollten vorteilhafter Weise bei dieser Beleuchtungsmethode einen kleinen Winkel zur Sensornormalen bilden, so dass der zentrale Kern des Lichtstrahls beim Eintritt und -austritt nicht gebrochen wird. Die Randstrahlen bleiben dann symmetrisch zu diesem zentralen Strahl.

Durch Messung der Intensität entlang des Querschnitts des austretenden Lichtstrahls erhält man die Winkelabhängigkeit der Intensität des reflektierten Strahls. Ein Messaufbau hierzu kann etwa durch Figur 7a realisiert werden: Das Licht einer kollimierten monochromatischen Lichtquelle im roten oder nahinfraroten Spektralbereich (z.B. HeNe-Laser oder Diodenlaser) wird mittels des Polarisators P zunächst nach der TM Polarisation bezüglich der Reflexion an der Sensorschicht selektiert. Anschließend erfolgt mit Linsen L2, L3 eine Aufweitung zu einem parallelen Strahl, dessen Querschnitt nun mindestens der Breite des Sensors entsprechen sollte (in dieser Abbildung nicht sichtbar, da der Sensor in die Blattebene hinein ragt). Über einen Umlenkspiegel 1 (UL1) und eine Zylinderlinse Z1 geeigneter Brennweite als Fokussiereinrichtung, wird ein in der Blattebene fokussierter und senkrecht zur Blattebene paralleler Strahl erzeugt. Dadurch ist es möglich alle in die Blattebene hineinragenden Sensoren parallel zu beleuchten und innerhalb eines jeden Sensorbereichs des Sensors einen Fokus auf gleicher Höhe zu erzeugen.

Der mittlere Winkel Θ sollte in etwa dem Winkel entsprechen, unter dem die SPR-Resonanz beobachtet wird. Der Öffnungswinkel des Strahls beträgt ein paar Grad, um einen für die zu erwartende Verschiebung der Resonanz ausreichenden Winkelbereich zu erfassen. Nach der internen Reflexion an der Goldschicht fächert der Strahl wieder auf und tritt nach einer weiteren Reflexion aus der lichtleitenden Schicht heraus. Eine weitere Zylinderlinse Z2 ist im Abstand der Brennweite vor dem Fokus angebracht, so dass anschließend wieder ein paralleler Strahlengang vorliegt. Ein Umlenkspiegel 2 (UL2) und eine Optik aus Linsen L4, L5 bilden die Intensitätsverteilung wie sie in der Ebene der Zylinderlinse 2 vorliegt auf einen Detektor, z.B. einen CCD-Chip (Det) ab. Dadurch entsteht auf dem CCD Chip (Det) ein Bild, bei dem in der vertikalen Richtung das Winkelspektrum abgebildet wird und in der in die Blattebene hineinzeigenden Richtung die verschiedenen Sensorbereiche des Sensors benachbart abgebildet sind. Durch diesen Aufbau ist es zwar nur möglich einen einzelnen Sensor parallel auszumessen, ein Vorteil liegt jedoch in der dafür benötigten kürzeren Zeit, so dass z.B. kinetische Experimente durchgeführt werden können. Ein zweidimensionaler Array könnte sequentiell Zeilenweise mit dieser Anordnung charakterisiert werden, indem dieser Array mit einer Verschiebemechanik durch den Fokus der Optischen Messanordnung geschoben wird.

Messanordnungen zum parallelen Auslesen der SPR-Sensoren oder Arrays sind in DE 199 55 556.7 beschrieben, auf deren diesbezüglichen Offenbarungsgehalt hiermit bezug genommen wird, und deren Inhalt durch Bezugnahme eingeschlossen wird.

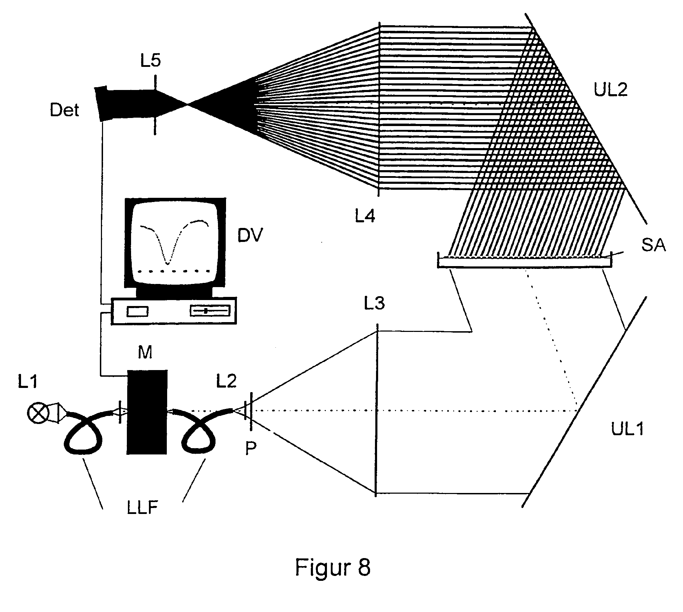

Ein Messaufbau, der nach dem Prinzip eines parallelen Strahlengangs innerhalb des Sensors (wie in Fig. 2) arbeitet, ist in Fig. 8 dargestellt. Hier wird das Licht einer Halogenlampe durch eine Lichtleitfaser (LLF) zum Monochromator (M) und durch eine weitere Lichtleitfaser zur Strahlaufweitung (Linsen L2,L3) geführt. Mittels des Polarisators P wird die TM-Polarisation bezüglich der Reflexion an der Sensorschicht selektiert. Die Beleuchtung des Sensorarrays (SA) erfolgt mit einem aufgeweiteten parallelen Strahlenbündel in einem Winkel unter dem die Resonanz erwartet wird.

Am oberen Ende des Sensors (siehe auch Fig. 2) tritt das Licht entweder nur parallel versetzt (Fig. 2b) unter dem selben Winkel aus (bei gerader Anzahl von Reflexionen), unter dem es unten eingetreten ist oder um den negativen Winkel bei einer ungeraden Anzahl von Reflexionen (Fig. 2a). Die Höhe H und Dicke D des SPR-Sensors sind nun so dimensioniert, dass die Anzahl der Reflexionen ungerade ist und somit nur der negative Winkel auftritt, das Licht also nach rechts oben (Fig. 8) austritt.

Im weiteren Strahlengang wird der Lichtweg der Beleuchtung praktisch umgekehrt: Über eine Sammellinse L4 mit großem Durchmesser und einem Objektiv L5 wird die Fläche des Sensorarrays auf den CCD Chip (Det) abgebildet (Teleskopabbildung). Da die abzubildende Oberfläche des Sensorarrays nicht senkrecht zur optischen Achse der Anordnung steht, wird bei einer herkömmlichen Kamera bei der das Objektiv parallel zum CCD Chip (Det) steht aufgrund nicht ausreichender Tiefenschärfe nur eine Linie des Objekts scharf abgebildet. Daher muss bildseitig der CCD Chip (D) ebenfalls zur optischen Achse verkippt sein, um über die ganze Sensorarrayfläche eine scharfe Abbildung zu gewährleisten. Dies wird realisiert, indem die CCD Kamera (D) mit einem Goniometer gegenüber dem Objektiv (L5) verkippt wird.

Das Bild des Sensorarrays wird zum Rechner DV, der die Rolle einer zentralen Steuereinrichtung spielt, übertragen, und jedem Sensorbereich wird ein Intensitätswert zugeordnet, indem das Intensitätsintegral über einen dem Sensorbereich zugeordneten Bildbereich gebildet wird. Nach dem Verstellen der Wellenlänge wird ein weiteres solches Bild detektiert und ausgewertet, und so wird sukzessive ein gesamtes Spektrum für jeden Sensorbereich ermittelt. Bei der Wellenlänge, bei der die Resonanzbedingung erfüllt ist, bricht die detektierte Intensität ein, da dann die Energie des Lichtes in Plasmonenanregung umgewandelt wird. Diesen Intensitätseinbruch nennt man auch "SPR-Dip". Die Wellenlänge der geringsten Intensität lässt sich numerisch bestimmen, und sie ist charakteristisch für den Brechungsindex der Flüssigkeit vor der Goldschicht.

Brechungsindex und Dichte sind für die meisten Proteine gleich, daher ist der Brechungsindex des Mediums vor der Goldschicht direkt proportional zur Massenbelegungsdichte.

Für eine Bestimmung der am jeweiligen SPR-Sensor angelagerten Moleküle ist nun nicht das absolute Intensitätsspektrum einer einzelnen Messung, sondern die Wellenlängenverschiebung des Minimums bei einer Messung in reiner Pufferlösung und zum Minimum bei einer zweiten Messung in Anwesenheit des Zielmoleküls notwendig. Erst diese Differenz erlaubt, eine Aussage über die Anlagerung von Molekülen zu treffen.

Bei der Verwendung von fokussiertem Licht, wie sie in Figur 7 erkennbar ist, müssen zusätzlich zu der in Fig. 8 beschriebenen Optik noch die Linsen Z1 und Z2 in den Strahlengang gebracht werden. Diese dienen der Fokussierung des Lichtstrahls auf einen Punkt bzw. auf eine Linie. Dort wird die Winkelabhängigkeit des SPR-Effekts zur Charakterisierung der Lösung verwendet.

Obwohl die Messanordnungen der Figuren 7 und 8 den Fall einer Transmissionsmessung betrafen (siehe auch Fig. 2a und 2b), ist offensichtlich, dass diese Anordnungen grundsätzlich auch für Reflexionsmessungen verwendet werden können (siehe auch Fig. 2c). Hierzu muss nur beachtet werden, dass dann die Lichteintrittsfläche und die Lichtaustrittsfläche gleich sind, und dementsprechend die Auswerteoptik angeordnet werden muss. Die Verwendung einer Reflexionsmessung hat den Vorteil, dass das Licht nicht durch die zu messende Flüssigkeit treten muss.

Die erfindungsgemäßen Sensoren bzw. Arrays finden bei der Wirkstoffsuche und dem Hochdurchsatzscreening Verwendung.

### Beispiel

Im folgenden wird ein Beispiel für die Herstellung eines Sensors nach Figur 6 erläutert.

Ein Borosilikatstreifen wird mit einer Dicke von 0,7 mm verwendet. Die Höhe der Glasstreifen von 17 mm ist so dimensioniert, dass bei Einstrahlung von parallelem Licht unter einem Winkel von 83° genau drei Reflexionen zugelassen werden.

Beide Stirnseiten, in die das parallele Licht ein- und ausgekoppelt wird, sind poliert. Die Breite der Streifen beträgt 78 mm. Im Abstand von 2,25 mm werden 33 Ausschnitte mittels einer Glassäge mit einer Breite von 1 mm und 6 mm Tiefe in den Glasstreifen eingebracht. Durch diese Ausschnitte entstehen kammähnliche Streifen mit 32 "Einzelfingern", die im weiteren als Sensorbereiche dienen.

Nach der Herstellung dieser Fingerstrukturen werden die einzelnen Glasstreifen mit einer Klebefolie derart beschichtet, dass bis auf 6 mm Länge der Finger der gesamte Glasstreifen abgedeckt ist. In einem anschließendem Beschichtungsprozess werden dadurch nur die unteren 6 mm der Finger mit einer SPR-fähigen Goldschicht beschichtet und das sonstige Glas nicht durch den Beschichtungsprozess beeinflusst. Die Schutzschicht wird nach der Beschichtung der Streifen entfernt. Zur Beschichtung wurde vorab eine ca. 1nm dicke Chromschicht als Haftvermittler aufgetragen. Die danach aufgebrachte Goldschicht besitzt eine Dicke von ca. 35 nm.

## Patentansprüche

1. SPR-Sensor für die Oberflächenplasmonen-Resonanz-Spektroskopie, zur parallelen Messung einer Vielzahl von Proben, umfassend
einen Körper (1; 1a), welcher mehrere SPR-Sensorbereiche (2) zur Führung von Strahlung für SPR-Messungen aufweist, die mit einem SPR-geeigneten Material beschichtet sind, und
Trennmittel (3; 7), welche die SPR-Sensorbereiche (2) durch Unterbrechung der Beschichtung mit SPR-geeignetem Material so trennen, dass jeder SPR-Sensorbereich (2) nur einer Probe zuordenbar ist, wobei
der Körper (1; 1a) strahlungsleitend ist und mit den SPR-Sensorbereichen (2) eine Einheit bildet, so dass der Strahlengang der durch die SPR-Sensorbereiche (2) geführten Strahlung auch durch den strahlungsleitenden Körper (1; 1a) verläuft,
**dadurch gekennzeichnet, dass**
der SPR-Sensor planar ist, und
die Trennmittel so beschaffen sind, dass die Strahlung vereinzelt wird.

2. SPR-Sensor nach Anspruch 1, **dadurch gekennzeichnet, dass** der Körper (1; 1a) und die SPR-Sensorbereiche (2) aus ein und demselben strahlungsdurchlässigen Substrat gefertigt sind.

3. SPR-Sensor nach Anspruch 1 oder 2, **dadurch gekennzeichnet, dass** die SPR-Sensorbereiche (2) und die Trennmittel (3) Bestandteile des Körpers (1) sind, und zusammen zumindest einen Teil des Körpers (1) ausmachen.

4. SPR-Sensor nach Anspruch 3, **dadurch gekennzeichnet, dass** der Körper (1) aus einem durchgehenden planaren Strahlungsleiter besteht, und die SPR-Sensorbereiche durch erste Flächen auf einer Oberfläche des Körpers (1) definiert sind, welche aus dem SPR-geeigneten Material bestehen, und die Trennmittel durch zweite Flächen definiert sind, welche zwischen den Flächen aus SPR-geeignetem Material auf der gleichen und/oder entgegengesetzten Oberfläche des Körpers aufgebracht sind, und aus einem zweiten Material bestehen, das geeignet ist die Strahlung in dem Strahlungsleiter zwischen den SPR-Sensorbereichen auszulöschen.

5. SPR-Sensor nach Anspruch 4, **dadurch gekennzeichnet, dass** die zweiten Flächen auf der gleichen Oberfläche des Körpers (1) ausgebildet sind, wie die ersten Flächen, und die zweiten Flächen Flüssigkeitsbarrieren zwischen benachbarten ersten Flächen bilden.

6. SPR-Sensor nach Anspruch 4 oder 5, **dadurch gekennzeichnet, dass** die ersten und zweiten Flächen als Streifen ausgebildet sind, die ersten Streifen alle parallel und gleich beabstandet sind, und der Abstand zwischen benachbarten ersten Streifen 0.01 bis 10 mm, vorzugsweise 0.1 bis 1 mm beträgt.

7. SPR-Sensor nach Anspruch 1 oder 2, **gekennzeichnet durch** fingerförmige Vorstände, welche SPR-Sensorbereiche (2) umfassen, und Ausnehmungen (7), welche Trennmittel (3; 7) zwischen den Ausnehmungen bilden.

8. SPR-Sensor nach Anspruch 7, **dadurch gekennzeichnet, dass** die fingerförmigen Vorstände in Sensorbereiche (2) unterteilt sind, und die Trennmittel (3; 7) zwischen den Sensorbereichen (2) durch weitere Ausnehmungen und/oder durch auf der Oberfläche der Vorstände beschichtete Bereiche gebildet sind.

9. SPR-Sensor nach Anspruch 7, **dadurch gekennzeichnet, dass** die Vorstände den SPR-Sensorbereichen (2) entsprechen, und parallel und mit gleichem Abstand stehen, und zusammen mit dem Körper (1) eine kammförmige Struktur bilden.

10. SPR-Sensor nach Anspruch 9, **dadurch gekennzeichnet, dass** die SPR-Sensorbereiche (2) im Raster einer Mikrotiterplatte beabstandet sind.

11. SPR-Sensor nach einem der Ansprüche 1 bis 10, **dadurch gekennzeichnet, dass** die Strahlung Licht aus dem Infrarotbereich oder dem sichtbaren Bereich ist.

12. SPR-Sensor nach einem der Ansprüche 1 bis 11, **dadurch gekennzeichnet, dass** der Körper (1; 1a) und die SPR-Sensorbereiche (2) aus Glas oder einem Polymer bestehen.

13. SPR-Sensor nach Anspruch 12, **dadurch gekennzeichnet, dass** der Körper (1; 1a) und die SPR-Sensorbereiche (2) aus Borosilikatglas bestehen.

14. SPR-Sensor nach einem der Ansprüche 1 bis 13, **dadurch gekennzeichnet, dass** zwischen den SPR-Sensorbereichen (2) und dem jeweiligen SPR-geeigneten Material eine haftvermittelnde Zwischenschicht, vorzugsweise aus Chrom oder Titan, liegt.

15. SPR-Sensor nach einem der Ansprüche 1 bis 14, **dadurch gekennzeichnet, dass** das SPR-geeignete Material ein Metall ist, vorzugsweise Platin, Gold, Silber, Aluminium, Kupfer, Nickel oder eine Legierung aus zwei oder mehr dieser Metalle.

16. SPR-Sensor nach einem der Ansprüche 1 bis 15, **dadurch gekennzeichnet, dass** der Körper (1; 1a) und die SPR-Sensorbereiche (2) einen Brechungsindex aus dem Bereich von 1.46 bis 1.58 aufweisen, und Gold als SPR-geeignetes Material verwendet wird.

17. SPR-Sensor nach einem der Ansprüche 1 bis 16, **dadurch gekennzeichnet, dass** die SPR-Sensorbereiche eine Querschnittsabmessung aufweisen, die im Bereich zwischen 0.1 mm und 5 mm liegt.

18. SPR-Sensoranordnung, umfassend eine Vielzahl von SPR-Sensoren nach einem der Ansprüche 1 bis 17, wobei die SPR-Sensoren planar ausgebildet und alle planparallel angeordnet sind.

19. SPR-Sensoranordnung nach Anspruch 18, **dadurch gekennzeichnet, dass** die SPR-Sensoren an einer Strahlungsaustrittsfläche oder Strahlungseintrittsfläche mit einer Oberfläche einer strahlungsdurchlässigen Platte (6) verbunden sind, und auf der entgegengesetzten Oberfläche der Platte (6) eine Strahlungsabdeckung (20) vorgesehen ist, welche Strahlungsdurchtrittsfenster (21) aufweist, die so angeordnet sind, dass ein Durchtritt von Strahlung aus den SPR-Sensorbereichen (2) oder in die SPR-Sensorbereiche (2) der einzelnen SPR-Sensoren gestattet wird.

20. SPR-Sensoranordnung nach Anspruch 18, **dadurch gekennzeichnet, dass** jeweils benachbarte SPR-Sensoren (1, 1a, 100) durch Zwischenelemente (5; 50) getrennt sind, welche jeweils mit den benachbarten SPR-Sensoren (2) verbunden sind.

21. SPR-Sensoranordnung nach Anspruch 20, **dadurch gekennzeichnet, dass** die Zwischenelemente (5; 50) so ausgebildet sind, dass sie auf der Seite der SPR-Sensoranordnung, aus der die Strahlung aus den Sensorbereichen (2) der SPR-Sensoren austritt, keinen Strahlungsaustritt gestatten.

22. SPR-Sensoranordnung nach Anspruch 20 oder 21, **dadurch gekennzeichnet, dass** jedes Zwischenelemente (50) mindestens einen ersten Teil (51) aufweist, welcher mit benachbarten SPR-Sensoren verbunden ist und den Abstand zwischen diesen benachbarten SPR-Sensoren definiert, und einen zweiten Teil (52), welcher zwischen benachbarten SPR-Sensoren einen Freiraum lässt, durch welchen ein Fluid fließen kann, wobei in dem zweiten Teil (52) Öffnungen (64) vorgesehen sind, welche mit SPR-geeignetem Material beschichtete Flächen von SPR-Sensorbereichen (2) eines der SPR-Sensoren freigeben, so dass das durch den Freiraum fließende Fluid mit den mit SPR-geeignetem Material beschichteten Flächen der SPR-Sensorbereichen (2) eines der SPR-Sensoren in Berührung kommen kann.

23. SPR-Sensoranordnung nach Anspruch 22, **dadurch gekennzeichnet, dass** die Vielzahl der SPR-Sensoren und die Zwischenelemente (50) so angeordnet sind, dass die einzelnen Freiräume zwischen benachbarten SPR-Sensoren einen mäanderförmigen Flusspfad bilden.

24. SPR-Sensoranordnung nach einem der Ansprüche 18 bis 23, **dadurch gekennzeichnet, dass** 10 bis 100000 SPR-Sensorbereiche angeordnet sind.

25. Verfahren zur Herstellung eines SPR-Sensors nach Anspruch 1, umfassend:
Beschichten von ersten Flächen auf einer Oberfläche eines planaren, strahlungsleitenden Substrats mit dem SPR-geeigneten Material, um die SPR-Sensorbereiche (2) im Substrat zu definieren,
Aufbringen von Erhebungen (3) eines zweiten Materials auf zweiten Flächen, welche zwischen den ersten Flächen liegen, um die Trennmittel (3; 7) zu bilden, wobei das zweite Material so ist, dass die Strahlung in dem Substrat in Bereichen zwischen den SPR-Sensorbereichen (2) ausgelöscht wird, und die Erhebungen (3) eine Höhe von der Substratoberfläche haben, dass jeder SPR-Sensorbereich nur einer Probe zuordenbar ist, indem jede Erhebung (3) eine Flüssigkeitsbarriere für die mit dem SPR-Sensor auszumessenden Flüssigkeiten bildet,
wobei der Schritt der Beschichtung der ersten Flächen vor oder nach dem Schritt des Aufbringens des zweiten Materials erfolgen kann.

26. Verfahren nach Anspruch 25, **dadurch gekennzeichnet, dass** zunächst die Erhebungen (3) auf den zweiten Flächen gebildet werden, und danach das SPR-geeignete Material auf die ersten Flächen aufgebracht wird, unter Verwendung der Erhebungen (3) auf den zweiten Flächen als Maske.

27. Verfahren nach Anspruch 25 oder 26, **dadurch gekennzeichnet, dass** die Erhebungen (3) aus dem zweiten Material mit Hilfe einer Maske hergestellt werden.

28. Verfahren nach Anspruch 27, **dadurch gekennzeichnet, dass** die Maske eine Siebdruckmaske, eine photostrukturierte Lackschicht, oder eine auf die Oberfläche des Substrats gefügte, vorstrukturierte Abdeckung ist.

29. Verfahren zur Herstellung eines SPR-Sensors nach Anspruch 1, umfassend:
Beschichten von ersten Flächen auf einer Oberfläche eines planaren, strahlungsleitenden Substrats mit dem SPR-geeigneten Material, um die SPR-Sensorbereiche (2) im Substrat zu definieren,
Bilden von Ausnehmungen (7) zwischen den SPR-Sensorbereichen (2), um die Trennmittel (3; 7) zu bilden,
wobei der Schritt der Beschichtung der ersten Flächen vor oder nach dem Schritt des Bildens des Ausnehmungen (7) erfolgen kann.

30. Verfahren nach Anspruch 29, **dadurch gekennzeichnet, dass** das Bilden der Ausnehmungen (7) durch sägen und/oder fräsen und/oder ätzen des strahlungsleitenden Substrats erfolgt.

31. Verfahren nach einem der Ansprüche 25 bis 31, **dadurch gekennzeichnet, dass** das Substrat aus Glas oder einem Polymer bestehen.

32. Verfahren nach Anspruch 31, **dadurch gekennzeichnet, dass** das Substrat aus Borosilikatglas bestehen.

33. Verfahren nach einem der Ansprüche 25 bis 32, **dadurch gekennzeichnet, dass** bei dem Schritt der Beschichtung der ersten Flächen, eine haftvermittelnde Zwischenschicht, vorzugsweise aus Titan oder Chrom, zwischen dem Substrat und dem SPR-geeigneten Material aufgebracht wird.

34. Verfahren nach einem der Ansprüche 25 bis 33, **dadurch gekennzeichnet, dass** das SPR-geeignete Material ein Metall ist, vorzugsweise Platin, Silber, Aluminium, Kupfer, Nickel, Gold oder eine Legierung aus zwei oder mehr dieser Metalle.

35. Verfahren nach einem der Ansprüche 25 bis 34, **dadurch gekennzeichnet, dass** das Substrat einen Brechungsindex aus dem Bereich von 1.46 bis 1.58 aufweist und Gold als SPR-geeignetes Material verwendet wird.

36. Verfahren nach einem der Ansprüche 25 bis 35, **dadurch gekennzeichnet, dass** die SPR-Sensorbereiche eine Querschnittsabmessung aufweisen, die im Bereich zwischen 0.1 mm und 5 mm liegt.

37. Verfahren zur Herstellung einer SPR-Sensoranordnung nach Anspruch 18, umfassend:
Verbinden der Lichtseintrittsflächen oder Lichtaustrittsflächen der einzelnen SPR-Sensoren mit einer Oberfläche einer strahlungsdurchlässigen Platte (6),
Anbringen einer Strahlungsabdeckung (20) auf der entgegengesetzten Oberfläche der Platte (6), welche Strahlungsdurchtrittsfenster (21) aufweist, die so angeordnet sind, dass ein Durchtritt von Strahlung aus den SPR-Sensorbereichen (2) oder in die SPR-Sensorbereiche (2) gestattet wird.

38. Verfahren nach Anspruch 37, **dadurch gekennzeichnet, dass** das Verbinden der SPR-Sensoren mit der Platte (6) mittels eines transparenten Klebstoffs geschieht, der sich vorzugsweise von dem Brechungsindex der Platte (6) und/oder der SPR-Sensoren um höchstens 10% unterscheidet.

39. Verfahren zur Herstellung einer SPR-Sensoranordnung nach Anspruch 18, umfassend das Verbinden der einzelnen SPR-Sensoren durch Zwischenelemente (5; 50), welche jeweils mit zwei benachbarten SPR-Sensoren verbunden werden.

40. Verfahren nach Anspruch 39, **dadurch gekennzeichnet, dass** die Zwischenelemente (5; 50) mit den SPR-Sensoren mittels Klebstoff verbunden werden, und der Brechungsindex des Klebstoffs und/oder der Zwischenelemente kleiner ist als der Brechungsindex der SPR-Sensoren.

41. Messanordnung für die Oberflächenplasmonen-Resonanz-Spektroskopie, zur gleichzeitigen Messung einer Vielzahl von Proben, umfassend
- einen SPR-Sensor nach einem der Ansprüche 1 bis 17 oder eine SPR-Sensoranordnung nach einem der Ansprüche 18 bis 24,
- eine Strahlungsquelle zum Aussenden von Strahlung einer für SPR-Messungen geeigneten Wellenlänge,
- eine Strahlungs-Fokussiereinrichtung (Z1) zur Bildung von konvergenter Strahlung aus der von der Strahlungsquelle ausgesandten Strahlung, wobei die konvergente Strahlung so geführt wird, dass sie zumindest in zwei unterschiedliche SPR-Sensorbereiche (2) der SPR-Sensoranordnung über jeweilige Strahlungseintrittsflächen (4) der SPR-Sensorbereiche (2) eintritt, und die Strahlungs-Fokussiereinrichtung (Z1) und die SPR-Sensorbereiche (2) so angeordnet sind, dass der Fokus der konvergenten Strahlung auf der Oberfläche des SPR-Sensorbereichs (2) liegt, die mit dem SPR-geeigneten Material beschichtet ist, um von dieser Oberfläche reflektiert zu werden, und
- eine Strahlungs-Auswerteeinrichtung (Z2, UL1, L4, L5, Det), um die reflektierte Strahlung zu erfassen und zu analysieren.

42. Messanordnung nach Anspruch 41, **dadurch gekennzeichnet, dass** die Strahlungseintrittsflächen (4) der SPR-Sensorbereiche (2) und die konvergente Strahlung so orientiert sind, dass der Mittenstrahl der konvergenten Strahlung beim Eintritt in den SPR-Sensorbereich (2) nicht gebrochen wird.

43. Messanordnung nach Anspruch 41 oder 42, **dadurch gekennzeichnet, dass** die Strahlungsaustrittsflächen (40) der SPR-Sensorbereiche (2) und die konvergente Strahlung so orientiert sind, dass der Mittenstrahl der konvergenten Strahlung beim Austritt aus den SPR-Sensorbereich (2) nicht gebrochen wird.

44. Messanordnung nach einem der Ansprüche 41 bis 43, **dadurch gekennzeichnet, dass** die Strahlungs-Fokussiereinrichtung (Z1) eine Zylinderlinse umfasst, wobei die Zylinderlinse und die SPR-Sensoranordnung so angeordnet sind, dass die von der Zylinderlinse gebildete konvergente Strahlung gleichzeitig in alle SPR-Sensorbereiche (2) des SPR-Sensors oder eines SPR-Sensors der SPR-Sensoranordnung eintritt.

45. Messanordnung nach Anspruch 44, **dadurch gekennzeichnet, dass** eine SPR-Sensoranordnung vorgesehen ist, und dass eine Verschiebungseinrichtung vorgesehen ist, welche ausgebildet ist die SPR-Sensoranordnung zu verschieben, damit ein SPR-Sensor nach dem anderen ausgemessen werden kann.

46. Messanordnung für die Oberflächenplasmonen-Resonanz-Spektroskopie, zur gleichzeitigen Messung einer Vielzahl von Proben, umfassend
- einen SPR-Sensor nach einem der Ansprüche 1 bis 17 oder eine SPR-Sensoranordnung (SA) nach einem der Ansprüche 18 bis 24,
- eine Strahlungsquelle (L1, LLF, M, P) zum Aussenden von Strahlung einer für SPR-Messungen geeigneten Wellenlänge,
- eine Strahlungs-Parallelisiereinrichtung (L3) zur Bildung von paralleler Strahlung,
- eine Strahlungs-Führungseinrichtung (UL1) zur Führung der parallelen Strahlung, wobei die Strahlungs-Führungseinrichtung (UL1) und die SPR-Sensoranordnung so angeordnet sind, dass die parallele Strahlung auf zumindest zwei der SPR-Sensorbereiche (2) der SPR-Sensoranordnung auf solche Weise trifft, dass die parallele Strahlung über jeweilige Strahlungseintrittsflächen in die SPR-Sensorbereiche (2) eintritt und darin so geführt wird, dass sie von der Oberfläche der SPR-Sensorbereiche reflektiert wird, die mit dem SPR-geeigneten Material beschichtet sind, und
- eine Strahlungs-Auswerteeinrichtung (UL2, L4, L5, Det), um die reflektierte Strahlung zu erfassen und zu analysieren.

47. Messanordnung nach Anspruch 46, **dadurch gekennzeichnet, dass** die Strahlungs-Führungseinrichtung (UL1) und der SPR-Sensor oder die SPR-Sensoranordnung (SA) so angeordnet sind, dass die parallele Strahlung auf alle SPR-Sensorbereiche des SPR-Sensors oder der SPR-Sensoranordnung (SA) trifft.

48. Messanordnung nach Anspruch 46 oder 47, **dadurch gekennzeichnet, dass** die Strahlungs-Auswerteeinrichtung (UL2, L4, L5, Det) eine Abbildungsoptik (L4, L5) und einen Detektor (Det) umfasst, wobei die Abbildungsoptik (L4, L5) die reflektierte Strahlung auf den Detektor (Det) abbildet und der Detektor (Det) eine räumliche Auflösung der von einzelnen SPR-Sensorbereichen stammenden Strahlung gestattet.

49. Messanordnung nach Anspruch 48, **dadurch gekennzeichnet, dass** die Strahlungs-Auswerteeinrichtung (UL2, L4, L5, Det) eine Einrichtung zur Verkippung des Detektors (Det) gegenüber der optischen Achse der Abbildungsoptik (L4, L5) umfasst.

50. Messanordnung nach Anspruch 49, **dadurch gekennzeichnet, dass** die Einrichtung zur Verkippung des Detektors (Det) ein Goniometer ist.

51. Messanordnung nach einem der Ansprüche 48 bis 50, **dadurch gekennzeichnet, dass** der Detektor (Det) einen CCD-Chip umfasst.

52. Messanordnung nach einem der Ansprüche 46 bis 51, **dadurch gekennzeichnet, dass** eine Steuereinheit (DV) vorgesehen ist, welche mit der Strahlungsquelle (L1, LLF, M, P) und der Strahlungs-Auswerteeinrichtung (UL2, L4, L5, Det) verbunden ist, und so ausgebildet ist, dass sie die Wellenlänge der von der Strahlungsquelle (L1, LLF, M, P) ausgestrahlten Strahlung einstellen kann, und die bei einer eingestellten Wellenlänge von der Strahlungs-Auswerteeinrichtung (UL2, L4, L5, Det) erfasste Intensität der von einzelnen SPR-Sensorbereichen (2) stammenden Strahlung erfassen und speichern kann.

## Claims

1. SPR sensor for surface plasmon resonance spectroscopy, for parallel measurement of a plurality of samples, comprising a body (1; 1a) which has several SPR sensor regions (2) for guiding radiation for SPR measurements which are coated with an SPR-sensitised material, and separating means (3; 7) which separate the SPR sensor regions (2) by interrupting the coating with SPR-sensitised material so that each SPR sensor region (2) can be assigned to only one sample, wherein the body (1; 1a) conducts radiation and forms a unit with the SPR sensor regions (2), so that the beam path of the radiation guided through the SPR sensor regions (2) also runs through the radiation-conducting body (1; 1a), **characterised in that** the SPR sensor is planar, and the separating means are made so that the radiation is isolated.

2. SPR sensor according to claim 1, **characterised in that** the body (1; 1a) and the SPR sensor regions (2) are manufactured from one and the same radiation-permeable substrate.

3. SPR sensor according to claim 1 or 2, **characterised in that** the SPR sensor regions (2) and the separating means (3) are constituents of the body (1), and together account for at least one part of the body (1).

4. SPR sensor according to claim 3, **characterised in that** the body (1) consists of an entirely planar radiation conductor, and the SPR sensor regions are defined by first surface areas on one surface of the body (1), which consist of the SPR-sensitised material, and the separating means are defined by second surface areas which are applied between the surface areas of SPR-sensitised material on the same and/or opposite surface of the body, and consist of a second material which is suitable to extinguish the radiation in the radiation conductor between the SPR sensor regions.

5. SPR sensor according to claim 4, **characterised in that** the second surface areas are formed on the same surface of the body (1) as the first surface areas, and the second surface areas form liquid barriers between adjacent first surface areas.

6. SPR sensor according to claim 4 or 5, **characterised in that** the first and second surface areas are formed as strips, the first strips all being spaced parallel and equidistantly, and the distance between adjacent first strips is 0.01 to 10 mm, preferably 0.1 to 1 mm.

7. SPR sensor according to claim 1 or 2, **characterised by** finger-like projections, which comprise SPR sensor regions (2), and recesses (7), which form separating means (3; 7) between the recesses.

8. SPR sensor according to claim 7, **characterised in that** the finger-like projections are subdivided into sensor regions (2), and the separating means (3; 7) are formed between the sensor regions (2) by further recesses and/or by regions coated on the surface of the projections.

9. SPR sensor according to claim 7, **characterised in that** the projections correspond to the SPR sensor regions (2) and are parallel and equidistant, and together with the body (1) form a comb-like structure.

10. SPR sensor according to claim 9, **characterised in that** the SPR sensor regions (2) are spaced in the grid of a microtitre plate.

11. SPR sensor according to one of claims 1 to 10, **characterised in that** the radiation is light from the infrared range or the visible range.

12. SPR sensor according to one of claims 1 to 11, **characterised in that** the body (1; 1a) and the SPR sensor regions (2) consist of glass or a polymer.

13. SPR sensor according to claim 12, **characterised in that** the body (1; 1a) and the SPR sensor regions (2) consist of borosilicate glass.

14. SPR sensor according to one of claims 1 to 13, **characterised in that** an adhesion-promoting intermediate layer, preferably of chromium or titanium, lies between the SPR sensor regions (2) and the particular SPR-sensitised material.

15. SPR sensor according to one of claims 1 to 14, **characterised in that** the SPR-sensitised material is a metal, preferably platinum, gold, silver, aluminium, copper, nickel or an alloy of two or more of these metals.

16. SPR sensor according to one of claims 1 to 15, **characterised in that** the body (1; 1a) and the SPR sensor regions (2) have a refractive index from the range from 1.46 to 1.58, and gold is used as SPR-sensitised material.

17. SPR sensor according to one of claims 1 to 16, **characterised in that** the SPR sensor regions have a cross-sectional dimension which lies in the range between 0.1 mm and 5 mm.

18. SPR sensor arrangement comprising a plurality of SPR sensors according to one of claims 1 to 17, wherein the SPR sensors are designed to be planar and are all arranged to be plane-parallel.

19. SPR sensor arrangement according to claim 18, **characterised in that** the SPR sensors are joined to one surface of a radiation-permeable plate (6) at a radiation exit surface area or radiation entrance surface area, and a radiation cover (20), which has radiation passage windows (21) which are arranged so that passage of radiation is permitted from the SPR sensor regions (2) or into the SPR sensor regions (2) of the individual SPR sensors, is provided on the opposite surface of the plate (6).

20. SPR sensor arrangement according to claim 18, **characterised in that** particular adjacent SPR sensors (1, 1a, 100) are separated by intermediate elements (5; 50), which are joined in each case to the adjacent SPR sensors (2).

21. SPR sensor arrangement according to claim 20, **characterised in that** the intermediate elements (5; 50) are designed so that they do not permit radiation exit on the side of the SPR sensor arrangement, from which the radiation exits from the sensor regions (2) of the SPR sensors.

22. SPR sensor arrangement according to claim 20 or 21, **characterised in that** each intermediate element (50) has at least one first part (51), which is joined to adjacent SPR sensors and defines the distance between these adjacent SPR sensors, and a second part (52), which leaves a gap between adjacent SPR sensors, through which a fluid may flow, wherein openings (64) are provided in the second part (52) which expose surface areas coated with SPR-sensitised material of SPR sensor regions (2) of one of the SPR sensors, so that the fluid flowing through the gap may come into contact with the surface areas coated with SPR-sensitised material of the SPR sensor regions (2) of one of the SPR sensors.

23. SPR sensor arrangement according to claim 22, **characterised in that** the plurality of SPR sensors and the intermediate elements (50) are arranged so that the individual gaps between adjacent SPR sensors form a meander-shaped flow path.

24. SPR sensor arrangement according to one of claims 18 to 23, **characterised in that** 10 to 100,000 SPR sensor regions are arranged.

25. Process for producing an SPR sensor according to claim 1, comprising:
coating first surface areas on one surface of a planar, radiation-conducting substrate with the SPR-sensitised material in order to define the SPR sensor regions (2) in the substrate,
applying elevations (3) of a second material to second surface areas, which lie between the first surface areas in order to form the separating means (3; 7),
wherein the second material is such that the radiation is extinguished in the substrate in regions between the SPR sensor regions (2), and the elevations (3) have a height from the substrate surface that each SPR sensor region can be assigned to only one sample, in that each elevation (3) forms a liquid barrier for the liquids to be measured out using the SPR sensor,
wherein the step of coating the first surface areas may take place before or after the step of applying the second material.

26. Process according to claim 25, **characterised in that** first of all the elevations (3) are formed on the second surface areas, and then the SPR-sensitised material is applied to the first surface areas using the elevations (3) on the second surface areas as a mask.

27. Process according to claim 25 or 26, **characterised in that** the elevations (3) are produced from the second material with the aid of a mask.

28. Process according to claim 27, **characterised in that** the mask is a screen printing mask, a photostructured lacquer layer, or a pre-structured cover fixed to the surface of the substrate.

29. Process for producing an SPR sensor according to claim 1, comprising:
coating first surface areas on one surface of a planar, radiation-conducting substrate with the SPR-sensitised material in order to define the SPR sensor regions (2) in the substrate,
forming recesses (7) between the SPR sensor regions (2) in order to form the separating means (3; 7),
wherein the step of coating the first surface areas may take place before or after the step of forming the recesses (7).

30. Process according to claim 29, **characterised in that** the forming of recesses (7) is effected by sawing and/or milling and/or etching the radiation-conducting substrate.

31. Process according to one of claims 25 to 30, **characterised in that** the substrate consists of glass or a polymer.

32. Process according to claim 31, **characterised in that** the substrate consists of borosilicate glass.

33. Process according to one of claims 25 to 32, **characterised in that** in the step of coating the first surface areas, an adhesion-promoting intermediate layer, preferably of titanium or chromium, is applied between the substrate and the SPR-sensitised material.

34. Process according to one of claims 25 to 33, **characterised in that** the SPR-sensitised material is a metal, preferably platinum, silver, aluminium, copper, nickel, gold or an alloy of two or more of these metals.

35. Process according to one of claims 25 to 34, **characterised in that** the substrate has a refractive index from the range from 1.46 to 1.58 and gold is used as SPR-sensitised material.

36. Process according to one of claims 25 to 35, **characterised in that** the SPR sensor regions have a cross-sectional dimension which lies in the range between 0.1 mm and 5 mm.

37. Process for producing an SPR sensor arrangement according to claim 18, comprising:
joining the light entrance surface areas or light exit surface areas of the individual SPR sensors to one surface of a radiation-permeable plate (6),
attaching a radiation cover (20) to the opposite surface of the plate (6), which has radiation passage windows (21) which are arranged so that passage of radiation is permitted from the SPR sensor regions (2) or into the SPR sensor regions (2).

38. Process according to claim 3 7, **characterised in that** the joining of the SPR sensors to the plate (6) is effected by means of a transparent adhesive which preferably differs from the refractive index of the plate (6) and/or of the SPR sensors by 10% at the most.

39. Process for producing an SPR sensor arrangement according to claim 18, comprising the joining of the individual SPR sensors by intermediate elements (5; 50), which are joined in each case to two adjacent SPR sensors.

40. Process according to claim 39, **characterised in that** the intermediate elements (5; 50) are joined to the SPR sensors by means of adhesive, and the refractive index of the adhesive and/or of the intermediate elements is less than the refractive index of the SPR sensors.

41. Measuring arrangement for surface plasmon resonance spectroscopy. for simultaneous measurement of a plurality of samples, comprising
- an SPR sensor according to one of claims 1 to 17 or an SPR sensor arrangement according to one of claims 18 to 24,
- a radiation source for emitting radiation of a wavelength suitable for SPR measurements,
- a radiation-focussing device (Z1) for forming convergent radiation from the radiation emitted by the radiation source, wherein the convergent radiation is guided so that it enters at least two different SPR sensor regions (2) of the SPR sensor arrangement via particular radiation entrance surface areas (4) of the SPR sensor regions (2), and the radiation-focussing device (Z1) and the SPR sensor regions (2) are arranged so that the focus of the convergent radiation lies on the surface of the SPR sensor region (2), which is coated with the SPR-sensitised material in order to be reflected from this surface, and
- a radiation-evaluating device (Z2, UL1, L4, L5, Det) in order to record and to analyse the reflected radiation.

42. Measuring arrangement according to claim 41, **characterised in that** the radiation entrance surface areas (4) of the SPR sensor regions (2) and the convergent radiation are orientated so that the central beam of the convergent radiation is not refracted on entering the SPR sensor region (2).

43. Measuring arrangement according to claim 41 or 42, **characterised in that** the radiation exit surface areas (40) of the SPR sensor regions (2) and the convergent radiation are oriented so that the central beam of the convergent radiation is not refracted on exiting from the SPR sensor region (2).

44. Measuring arrangement according to one of claims 41 to 43, **characterised in that** the radiation-focussing device (Z1) comprises a cylindrical lens, wherein the cylindrical lens and the SPR sensor arrangement are arranged so that the convergent radiation formed by the cylindrical lens simultaneously enters all SPR sensor regions (2) of the SPR sensor or an SPR sensor of the SPR sensor arrangement.

45. Measuring arrangement according to claim 44, **characterised in that** an SPR sensor arrangement is provided, and **in that** a displacement device is provided, which is designed to displace the SPR sensor arrangement so that one SPR sensor may be measured out after the other.

46. Measuring arrangement for surface plasmon resonance spectroscopy, for simultaneous measurement of a plurality of samples, comprising
- an SPR sensor according to one of claims 1 to 17 or an SPR sensor arrangement (SA) according to one of claims 18 to 24,
- a radiation source (L1, LLF, M, P) for emitting radiation of a wavelength suitable for SPR measurements,
- a radiation-parallelisation device (L3) for forming parallel radiation,
- a radiation-guiding device (UL1) for guiding the parallel radiation, wherein the radiation-guiding device (UL1) and the SPR sensor arrangement are arranged so that the parallel radiation meets at least two of the SPR sensor regions (2) of the SPR sensor arrangement in such a manner that the parallel radiation enters the SPR sensor regions (2) via particular radiation entrance surface areas and is guided therein so that it is reflected from the surface of the SPR sensor regions which are coated with the SPR-sensitised material, and
- a radiation-evaluating device (UL2, L4, L5, Det) in order to record and to analyse the reflected radiation.

47. Measuring arrangement according to claim 46, **characterised in that** the radiation-guiding device (UL1) and the SPR sensor or the SPR sensor arrangement (SA) are arranged so that the parallel radiation meets all SPR sensor regions of the SPR sensor or the SPR sensor arrangement (SA).

48. Measuring arrangement according to claim 46 or 47, **characterised in that** the radiation-evaluating device (UL2, L4, L5, Det) comprises an imaging system (L4, L5) and a detector (Det), wherein the imaging system (L4, L5) reproduces the reflected radiation on the detector (Det) and the detector (Det) permits spatial resolution of the radiation originating from individual SPR sensor regions.

49. Measuring arrangement according to claim 48, **characterised in that** the radiation-evaluating device (UL2, L4, L5, Det) comprises a device for tilting the detector (Det) with respect to the optical axis of the imaging system (L4, L5).

50. Measuring arrangement according to claim 49, **characterised in that** the device for tilting the detector (Det) is a goniometer.

51. Measuring arrangement according to one of claims 48 to 50, **characterised in that** the detector (Det) comprises a CCD chip.

52. Measuring arrangement according to one of claims 46 to 51, **characterised in that** a control unit (DV) is provided which is connected to the radiation source (L1, LLF, M, P) and the radiation-evaluating device (UL2, L4, L5, Det), and is designed so that it may set the wavelength of the radiation emitted by the radiation source (L1, LLF, M, P), and may record and store the intensity of the radiation originating from individual SPR sensor regions (2) recorded by the radiation-evaluating device (UL2, L4, L5, Det) at a set wavelength.

## Revendications

1. Détecteur SPR pour la spectroscopie par résonance plasmonique de surface, destiné à la mesure parallèle d'une multitude d'échantillons, comprenant
un corps (1 ; 1a) qui présente plusieurs zones de détecteurs SPR (2) servant à guider le rayonnement pour des mesures SPR, lesquelles zones sont recouvertes d'un matériau approprié à la SPR, et
des moyens de séparation (3 ; 7) qui séparent les zones de détecteurs SPR (2) en interrompant le revêtement de matériau approprié à la SPR de telle sorte qu'un seul échantillon puisse être attribué à chaque zone de détecteurs SPR (2),
le corps (1 ; 1a) étant conducteur de rayonnement et formant avec les zones de détecteurs SPR (2) une unité de sorte que la trajectoire du rayonnement guidé au travers des zones de détecteurs SPR (2) s'étende également au travers du corps (1 ; 1a) conducteur de rayonnement,
**caractérisé en ce que**
le détecteur SPR est planaire, et
les moyens de séparation sont de telle nature que le rayonnement est sporadique.

2. Détecteur SPR selon la revendication 1, **caractérisé en ce que** le corps (1 ; 1a) et les zones de détecteurs SPR (2) sont fabriqués dans un même substrat perméable au rayonnement.

3. Détecteur SPR selon la revendication 1 ou 2, **caractérisé en ce que** les zones de détecteurs SPR (2) et les moyens de séparation (3) sont des composants du corps (1), et constituent ensemble au moins une partie du corps 1.

4. Détecteur SPR selon la revendication 3, **caractérisé en ce que** le corps (1) est composé d'un conducteur de rayonnement planaire d'un seul tenant, et les zones de détecteurs SPR sont définies par des premières surfaces sur une surface du corps (1) qui sont composées du matériau approprié à la SPR, et les moyens de séparation sont définis par des secondes surfaces qui sont appliquées entre les surfaces en matériau approprié à la SPR sur la même surface et/ou opposée du corps, et sont composés d'un second matériau qui est approprié à l'élimination du rayonnement dans le conducteur de rayonnement entre les zones de détecteurs SPR.

5. Détecteur SPR selon la revendication 4, **caractérisé en ce que** les secondes surfaces sont conçues sur la même surface du corps (1) comme les premières surfaces, et les secondes surfaces forment des barrières pour les liquides entre des premières surfaces contiguës.

6. Détecteur SPR selon la revendication 4 ou 5, **caractérisé en ce que** les premières et les secondes surfaces sont conçues comme des bandes, les premières bandes sont toutes parallèles et espacées de manière identique, et la distance entre des premières bandes contiguës est comprise entre 0,01 et 10 mm au maximum, de préférence entre 0,1 et 1 mm au maximum.

7. Détecteur SPR selon la revendication 1 ou 2, **caractérisé par** des saillies en forme de doigts qui comprennent des zones de détecteurs SPR (2), et des évidements (7) qui forment des moyens de séparation (3 ; 7) entre les évidements.

8. Détecteur SPR selon la revendication 7, **caractérisé en ce que** les saillies en forme de doigts sont divisées en zones de détecteurs (2), et les moyens de séparation (3 ; 7) entre les zones de détecteurs 2 sont formés par d'autres évidements et/ou par des zones recouvertes sur la surface des saillies.

9. Détecteur SPR selon la revendication 7, **caractérisé en ce que** les saillies correspondent aux zones de détecteurs SPR (2) et sont parallèles et à la même distance, et forment conjointement avec le corps (1) une structure en forme de peigne.

10. Détecteur SPR selon la revendication 9, **caractérisé en ce que** les zones de détecteurs SPR (2) sont espacées dans une trame d'une plaque de microtitrage.

11. Détecteur SPR selon l'une quelconque des revendications 1 à 10, **caractérisé en ce que** le rayonnement est de la lumière provenant de la zone infrarouge ou de la zone visible.

12. Détecteur SPR selon l'une quelconque des revendications 1 à 11, **caractérisé en ce que** le corps (1 ; 1a) et les zones de détecteurs SPR (2) sont composés de verre ou d'un polymère.

13. Détecteur SPR selon la revendication 12, **caractérisé en ce que** le corps (1 ; 1a) et les zones de détecteurs SPR (2) sont composés de verre au borosilicate.

14. Détecteur SPR selon l'une quelconque des revendications 1 à 13, **caractérisé en ce qu'**entre les zones de détecteurs SPR (2) et le matériau approprié à la SPR respectif se trouve une couche intermédiaire d'agent adhésif, de préférence en chrome ou en titane.

15. Détecteur SPR selon l'une quelconque des revendications 1 à 14, **caractérisé en ce que** le matériau approprié à la SPR est un métal, de préférence du platine, de l'or, de l'argent, de l'aluminium, du cuivre, du nickel ou un alliage de deux ou plus de ces métaux.

16. Détecteur SPR selon l'une quelconque des revendications 1 à 15, **caractérisé en ce que** le corps (1 ; 1a) et les zones de détecteurs SPR (2) présentent un indice de réfraction compris entre 1,46 et 1,58 au maximum, et de l'or est utilisé comme matériau approprié à la SPR.

17. Détecteur SPR selon l'une quelconque des revendications 1 à 16, **caractérisé en ce que** les zones de détecteurs SPR présentent une dimension en coupe transversale qui se trouve dans la plage comprise entre 0,1 mm et 5 mm.

18. Disposition de détecteurs SPR, comprenant une multitude de détecteurs SPR selon l'une quelconque des revendications 1 à 17, les détecteurs SPR étant conçus de manière planaire et tous étant disposés de manière parallélépipédique.

19. Disposition de détecteurs SPR selon la revendication 18, **caractérisé en ce que** les détecteurs SPR sont reliés sur une surface de sortie de rayonnement ou d'entrée de rayonnement à une surface d'une plaque (6) perméable au rayonnement, et sur la surface opposée de la plaque (6) est prévu un dispositif de recouvrement pour rayonnement (20) qui présente des fenêtres de passage de rayonnement (21) qui sont disposées de telle sorte qu'un passage du rayonnement depuis les zones de détecteurs SPR (2) ou dans les zones de détecteurs SPR (2) de chaque détecteur SPR soit autorisé.

20. Disposition de détecteurs SPR selon la revendication 18, **caractérisé en ce que** des détecteurs SPR respectivement contigus (1, 1a, 100) sont séparés par des éléments intermédiaires (5 ; 50) qui sont reliés respectivement aux détecteurs SPR (2) contigus.

21. Disposition de détecteurs SPR selon la revendication 20, **caractérisé en ce que** les éléments intermédiaires 5 ; 50 sont conçus de telle sorte qu'ils n'autorisent aucune sortie de rayonnement sur le côté de la disposition de détecteurs SPR, duquel le rayonnement sort des détecteurs SPR (2).

22. Disposition de détecteurs SPR selon la revendication 20 ou 21, **caractérisé en ce que** chaque élément intermédiaire (50) présente au moins une première partie (51) qui est reliée aux détecteurs SPR contigus et définit l'écart entre ces détecteurs SPR contigus, et une seconde partie (52) qui laisse un espace libre entre les détecteurs SPR contigus, au travers duquel un fluide peut s'écouler, dans la seconde partie (52) étant prévus des orifices (64) qui libèrent des surfaces recouvertes de matériau approprié à la SPR des zones de détecteurs SPR (2) d'un des détecteurs SPR de sorte que le fluide s'écoulant au travers de l'espace libre puisse entrer en contact avec les surfaces recouvertes de matériau approprié à la SPR des zones de détecteurs SPR (2) d'un des détecteurs SPR.

23. Disposition de détecteurs SPR selon la revendication 22, **caractérisé en ce que** la multitude de détecteurs SPR et les éléments intermédiaires (50) sont disposés de telle sorte que les espaces libres individuels entre des détecteurs SPR contigus forment une voie d'écoulement en forme de méandres.

24. Disposition de détecteurs SPR selon l'une quelconque des revendications 18 à 23, **caractérisé en ce que** 10 à 100 000 zones de détecteurs SPR sont disposées.

25. Procédé de fabrication d'un détecteur SPR selon la revendication 1, comprenant :
le recouvrement de premières surfaces sur une surface d'un substrat planaire, conducteur de rayonnement avec du matériau approprié à la SPR afin de définir les zones de détecteurs SPR (2) dans le substrat,
l'application de parties surélevées (3) d'un second matériau sur des secondes surfaces qui se trouvent entre les premières surfaces afin de former les moyens de séparation (3 ; 7), le second matériau étant tel que le rayonnement est éliminé dans le substrat entre les zones de détecteurs SPR (2), et les parties surélevées (3) présentent une hauteur de la surface de substrat, que chaque zone de détecteurs SPR peut être attribuée uniquement à un échantillon, tandis que chaque partie surélevée (3) forme une barrière pour les liquides à mesurer à l'aide du détecteur SPR,
l'étape de recouvrement des premières surfaces pouvant être effectuée avant ou après l'étape d'application du second matériau.

26. Procédé selon la revendication 25, **caractérisé en ce que** les parties surélevées (3) sont formées d'abord sur les secondes surfaces, et le matériau approprié à la SPR est ensuite appliqué sur les premières surfaces en utilisant les parties surélevées (3) sur les secondes surfaces comme masque.

27. Procédé selon la revendication 25 ou 26, **caractérisé en ce que** les parties surélevées (3) sont fabriquées à partir du second matériau à l'aide d'un masque.

28. Procédé selon la revendication 27, **caractérisé en ce que** le masque est un masque de sérigraphie, une couche de vernis photostructurée ou un dispositif de recouvrement préstructuré, ajouté sur la surface du substrat.

29. Procédé de fabrication d'un détecteur SPR selon la revendication 1, comprenant :
le recouvrement des premières surfaces sur une surface d'un substrat planaire, conducteur de rayonnement avec un matériau approprié à la SPR afin de définir les zones de détecteurs SPR (2) dans le substrat,
la formation d'évidements 7 entre les zones de détecteurs SPR (2) afin de former les moyens de séparation (3 ; 7),
l'étape de recouvrement des premières surfaces pouvant être effectuée avant ou après l'étape de formation des évidements (7).

30. Procédé selon la revendication 29, **caractérisé en ce que** la formation des évidements (7) est effectuée par sciage et/ou fraisage et/ou corrosion du substrat conducteur de rayonnement.

31. Procédé selon l'une quelconque des revendications 25 à 30, **caractérisé en ce que** le substrat est composé de verre ou d'un polymère.

32. Procédé selon la revendication 31, **caractérisé en ce que** le substrat est composé de verre au borosilicate.

33. Procédé selon l'une quelconque des revendications 25 à 32, **caractérisé en ce que** lors de l'étape de recouvrement des premières surfaces, une couche intermédiaire d'agent adhésif, de préférence en titane ou en chrome, est appliquée entre le substrat et le matériau approprié à la SPR.

34. Procédé selon l'une quelconque des revendications 25 à 33, **caractérisé en ce que** le matériau approprié à la SPR est un métal, de préférence du platine, de l'argent, de l'aluminium, du cuivre, du nickel, de l'or ou un alliage de deux ou plus de ces métaux.

35. Procédé selon l'une quelconque des revendications 25 à 34, **caractérisé en ce que** le substrat présente un indice de réfraction compris entre 1,46 et 1,58 au maximum et de l'or est utilisé comme matériau approprié à la SPR.

36. Procédé selon l'une quelconque des revendications 25 à 35, **caractérisé en ce que** les zones de détecteurs SPR présentent une dimension en coupe transversale qui se trouve dans la plage comprise entre 0,1 mm et 5 mm.

37. Procédé de fabrication d'une disposition de détecteurs SPR selon la revendication 18, comprenant :
le raccordement des surfaces d'entrée ou de sortie de la lumière des détecteurs SPR individuels à une surface d'une plaque perméable au rayonnement (6),
le montage d'un dispositif de recouvrement pour rayonnement (20) sur la surface opposée de la plaque (6) qui présente des fenêtres de passage de rayonnement (21) qui sont disposées de telle sorte qu'un passage de rayonnement depuis les zones de détecteurs SPR (2) ou dans les zones de détecteurs SPR (2) soit autorisé.

38. Procédé selon la revendication 37, **caractérisé en ce que** le raccordement des détecteurs SPR à la plaque (6) est effectué au moyen d'une colle transparente qui se distingue de préférence de l'indice de réfraction de la plaque (6) et/ou des détecteurs SPR de 10 % au maximum.

39. Procédé de fabrication d'une disposition de détecteurs SPR selon la revendication 18, comprenant le raccordement des détecteurs SPR individuels par des éléments intermédiaires (5 ; 50) qui sont raccordés respectivement à deux détecteurs SPR contigus.

40. Procédé selon la revendication 39, **caractérisé en ce que** les éléments intermédiaires (5 ; 50) sont reliés aux détecteurs SPR au moyen de colle, et l'indice de réfraction de la colle et/ou des éléments intermédiaires est plus petit que l'indice de réfraction des détecteurs SPR.

41. Montage de mesure pour la spectroscopie par résonance plasmonique de surface, servant à mesurer simultanément une multitude d'échantillons, comprenant
- un détecteur SPR selon l'une quelconque des revendications 1 à 17 ou une disposition de détecteurs SPR selon l'une quelconque des revendications 18 à 24,
- une source de rayonnement destinée à émettre le rayonnement d'une longueur d'ondes appropriée aux mesures SPR,
- un dispositif de concentration de rayonnement Z1 destiné à former le rayonnement convergent depuis le rayonnement émis par la source de rayonnement, le rayonnement convergent étant guidé de telle sorte qu'il entre au moins dans deux zones de détecteurs SPR (2) différentes de la disposition de détecteurs SPR sur chaque surface d'entrée de rayonnement (4) des zones de détecteurs SPR (2), et le dispositif de concentration de rayonnement (Z1) et les zones de détecteurs SPR (2) étant disposés de telle manière que le foyer du rayonnement convergent se trouve sur la surface de la zone de détecteurs SPR (2) qui est recouverte du matériau approprié à la SPR afin d'être réfléchi par cette surface, et
- un dispositif d'évaluation du rayonnement (Z2, UL1, L4, L5, Det) afin de détecter et d'analyser le rayonnement réfléchi.

42. Montage de mesure selon la revendication 41, **caractérisé en ce que** les surfaces d'entrée de rayonnement (4) des zones de détecteurs SPR (2) et le rayonnement convergent sont orientés de telle manière que le rayon médian du rayonnement convergent n'est pas réfracté lors de l'entrée dans la zone de détecteurs SPR (2).

43. Montage de mesure selon la revendication 41 ou 42, **caractérisé en ce que** les surfaces de sortie de rayonnement 40 des zones de détecteurs SPR (2) et le rayonnement convergent sont orientés de telle manière que le rayon médian du rayonnement convergent n'est pas réfracté lors de la sortie de la zone de détecteurs SPR (2).

44. Montage de mesure selon l'une quelconque des revendications 41 à 43, **caractérisé en ce que** le dispositif de concentration de rayonnement (Z1) comprend une lentille cylindrique, la lentille cylindrique et la disposition de détecteurs SPR étant disposées de telle manière que le rayonnement convergent formé par la lentille cylindrique entre simultanément dans toutes les zones de détecteurs SPR (2) du détecteur SPR ou d'un détecteur SPR de la disposition de détecteurs SPR.

45. Montage de mesure selon la revendication 44, **caractérisé en ce qu'**une disposition de détecteurs SPR est prévue, et **en ce qu'**un dispositif de déplacement est prévu, lequel est conçu pour déplacer la disposition de détecteurs SPR afin que les détecteurs SPR puissent être mesurés l'un après l'autre.

46. Montage de mesure pour la spectroscopie par résonance plasmonique de surface, servant à mesurer simultanément une multitude d'échantillons, comprenant
- un détecteur SPR selon l'une quelconque des revendications 1 à 17 ou une disposition de détecteurs SPR (SA) selon l'une quelconque des revendications 18 à 24,
- une source de rayonnement (L1, LLF, M, P) destinée à émettre le rayonnement d'une longueur d'ondes appropriée aux mesures SPR,
- un dispositif de parallélisation de rayonnement (L3) destiné à former un rayonnement parallèle,
- un dispositif de guidage de rayonnement (UL1) destiné à guider le rayonnement parallèle, le dispositif de guidage de rayonnement (UL1) et la disposition de détecteurs SPR étant disposés de telle manière que le rayonnement parallèle atteigne au moins deux des zones de détecteurs SPR (2) de la disposition de détecteurs SPR de telle manière que le rayonnement parallèle entre sur des surfaces d'entrée de rayonnement respectives dans les zones de détecteurs SPR (2) et y soit guidé de telle sorte qu'il soit réfléchi par la surface des zones de détecteurs SPR qui sont recouvertes du matériau approprié à la SPR, et
- un dispositif d'évaluation de rayonnement (UL2, L4, L5, Det) afin de détecter et d'analyser le rayonnement réfléchi.

47. Montage de mesure selon la revendication 46, **caractérisé en ce que** le dispositif de guidage du rayonnement (UL1) et le détecteur SPR ou la disposition de détecteurs SPR (SA) étant disposés de telle manière que le rayonnement parallèle atteigne toutes les zones de détecteurs SPR du détecteur SPR ou de la disposition de détecteurs SPR (SA).

48. Montage de mesure selon la revendication 46 ou 47, **caractérisé en ce que** le dispositif d'évaluation du rayonnement (UL2, L4, L5, Det) comprend une optique de reproduction (L4, L5) et un détecteur (Det), l'optique de reproduction (L4, L5) reproduisant le rayonnement réfléchi sur le détecteur (Det) et le détecteur (Det) autorisant une dispersion spatiale du rayonnement provenant des zones de détecteurs SPR individuelles.

49. Montage de mesure selon la revendication 48, **caractérisé en ce que** le dispositif d'évaluation du rayonnement (UL2, L4, L5, De) comprend un dispositif d'inclinaison du détecteur Det par rapport à l'axe optique de l'optique de reproduction (L4, L5).

50. Montage de mesure selon la revendication 49, **caractérisé en ce que** le dispositif d'inclinaison du détecteur (Det) est un goniomètre.

51. Montage de mesure selon l'une quelconque des revendications 48 à 50, **caractérisé en ce que** le détecteur Det comprend une puce CCD.

52. Montage de mesure selon l'une quelconque des revendications 46 à 51, **caractérisé en ce qu'**une unité de commande (DV) est prévue, laquelle est reliée à la source de rayonnement (L1, LLF, M, P) et au dispositif d'évaluation du rayonnement (UL2, L4, L5, Det), et est conçue de telle manière qu'elle puisse régler la longueur d'ondes du rayonnement émis par la source de rayonnement (L1, LLF, M, P), et peut détecter et enregistrer l'intensité détectée pour une longueur d'ondes réglée par le dispositif d'évaluation du rayonnement (UL2, L4, L5, Det) du rayonnement provenant des zones de détecteurs SPR (2) individuelles.
